# EUROPÄISCHE PATENTSCHRIFT

(11) **EP 2 507 036 B1**
(45) Veröffentlichungstag und Bekanntmachung des Hinweises auf die Patenterteilung: **26.02.2014**
(21) Anmeldenummer: 10803581.7
(22) Anmeldetag: 02.12.2010
(51) Int. Cl.: B08B 1/00, B08B 1/02, B08B 1/04, B08B 3/10, B29B 7/16, B29B 7/24, B29C 67/00, B08B 3/04

(54) **RAPID-PROTOTYPING-ANLAGE MIT EINER MISCHEINHEIT**
RAPID PROTOTYPING INSTALLATION COMPRISING A MIXING UNIT
INSTALLATION DE PROTOTYPAGE RAPIDE COMPORTANT UNE UNITÉ MÉLANGEUSE

(30) Priorität: 02.12.2009 DE 102009056688
(43) Veröffentlichungstag der Anmeldung: 10.10.2012
(73) Patentinhaber: Exone GmbH, 86167 Augsburg (DE)
(72) Erfinder: HÖCHSMANN, Rainer, 86863 Langenneufnach (DE); MÜLLER, Alexander, 86343 Königsbrunn (DE); LUDL, Herbert, 86405 Meitingen (DE); KRABLER, Bernd, 86672 Thierhaupten (DE); LEINAUER, Thomas, 86420 Diedorf (DE)
(74) Vertreter: Viering, Jentschura & Partner Patent- und Rechtsanwälte
(86) Internationale Anmeldenummer: PCT/EP2010/068704
(87) Internationale Veröffentlichungsnummer: WO 2011/067319

(56) Entgegenhaltungen:
- EP-A2- 1 700 686
- WO-A1-03/103932
- WO-A2-2007/139938
- WO-A2-2010/061174
- US-A1- 2002 090 410
- US-A1- 2005 104 257
- US-A1- 2005 280 185

## Beschreibung

Die vorliegende Erfindung betrifft eine Anlage zum schichtweisen Aufbau eines Formkörpers durch Ausbilden übereinander liegender Schichten aus einem Baumaterial, welches ein Gemisch aus einem ersten körnigen Material als eine erste Komponente und einer mit der ersten Komponente vermengten zweiten Komponente enthält, und durch selektives Verfestigen der jeweiligen Baumaterial-Schicht in einem Teilbereich vor dem Ausbilden der nächstfolgenden Schicht mittels einer Druckvorrichtung, aufweisend eine Druckvorrichtung, welche einen Druckkopfträger und einen daran aufgehängten Druckkopf aufweist, eine Beschickungsstation und einen Beschichter, der zum Beladen des Beschichters mit Baumaterial in die Beschickungsstation hinein in eine Beschickungsposition und zum Aufbringen einer Baumaterial-Schicht aus der Beschickungsstation heraus und über ein Baufeld hinweg horizontal verfahrbar ist. Eine solche Anlage ist z.B. aus der WO 00/78485 A2 oder der DE 10 2005 056 260 A1 bekannt.

Folglich betrifft die vorliegende Erfindung eine Anlage zum schichtweisen Aufbau eines Formkörpers aus einem in vorbestimmten Teilbereichen verfestigten körnigen Material. Insbesondere betrifft die vorliegende Erfindung eine Anlage zum schichtweisen Aufbau eines Formkörpers aus einem Baumaterialgemisch, wozu die Anlage eine Mischeinheit aufweist zum Erzeugen einer homogenen Baumaterialmischung aus einem ersten körnigen Material als eine erste Komponente und einer mit der ersten Komponente vermengten zweiten Komponente. Die Anlage weist weiter einen Beschichter auf, der in einer anlagenfesten bzw. stationären Beschickungsstation mit dem Baumaterialgemisch befüllt wird und aus der Beschickungsstation heraus und über ein Baufeld verfahrbar ist. Mit dem Beschichter werden auf das Baufeld, das in einem Behälter auf einer absenkbaren Bauplattform ausgebildet sein kann, nacheinander einzelne Schichten aus dem Baumaterialgemisch aufgetragen, die einzeln nacheinander in vorbestimmten Teilbereichen verfestigt werden.

Auf dem Gebiet des Rapid Prototypings (wie z.B. des sog. Lasersinterns oder der sog. Druckverfahren) sind Anlagen bekannt, bei denen der Beschichter mit einer Baumaterialmischung gespeist wird, die in einer neben der Anlage am Boden angeordneten Mischeinrichtung zubereitet wird. Hierzu sind neben der Anlage ein Mischbehälter sowie mehrere über dem Mischbehälter angeordnete Dosierbehälter zur Aufnahme von körnigem Material aufgebaut. Die Dosierbehälter können z.B. Sand enthalten. Z.B. kann einer der Dosierbehälter Frischsand und ein anderer der Dosierbehälter Altsand bzw. recycelten Sand enthalten, wozu die Dosierbehälter z.B. jeweils über eine Saugleitung mit einem entsprechenden Sandbehälter verbunden sind. Ferner können über entsprechende Leitungen verschiedene Flüssigkeiten in den Mischbehälter eingebracht/gepumpt werden. Im Bereich des 3D-Druckens können so z.B. Frischsand und/oder Altsand sowie ein flüssiger Härter bzw. Aktivator miteinander vermischt werden. Die derart zubereitete Baumaterialmischung wird anschließend z.B. über einen flexiblen Schlauch, in dem eine Förderschnecke vorgesehen ist, in einen in die Anlage integrierten und oberhalb des Beschichters vorgesehen stationären Vorratsbehälter gefördert, über den der Beschichter mit der Baumaterialmischung befüllt werden kann, wenn er sich in der Beschickungsposition befindet.

In DE 201 07 262 U1 sind neben/außerhalb der Anlage zwei Vorratsbehälter angeordnet, in denen Pulvermaterial gespeichert ist. In der Anlage ist ein Dosierbehälter oberhalb des Beschichters und in dessen Endstellung angeordnet zum Dosieren und Bereitstellen des Pulvers für die aufzubringende Schicht. Der Dosierbehälter ist mit den Vorratsbehältern über eine Förderleitung verbunden, die mit einer darin vorgesehenen mechanischen Förderung ausgebildet ist.

Zum einen ist bei den oben beschriebenen Anlagen eine entsprechende Fördereinrichtung zum Fördern der Baumaterialmischung zu dem oberhalb des Beschichters angeordneten Vorratsbehälter oder Dosierbehälter notwendig. Zum anderen kann die Qualität der Mischung unter dem Transport bzw. der Förderung der Mischung leiden und/oder eine Entmischung auftreten.

DE 10 2007 006 478 A1 beschreibt eine Vorrichtung zum selektiven Zuführen von Pulvermaterial in eine Pulverschicht, wobei diese Zuführvorrichtung zwei mitfahrende Vorratsbehälter und eine mitfahrende Mischeinrichtung zum Mischen von unterschiedlichen Pulverwerkstoffen aufweist, so dass innerhalb einer Pulverschicht unterschiedliche Pulverzusammensetzungen erzielbar sind.

WO 2007/139938 A2 beschreibt einen 3D-Drucker, der einen Verteiltrichter aufweist, welcher darin befindliches Pulver linienförmig, gleichmäßig entlang der Länge von einer Ausbreitwalze ausgibt, welche das Pulver über den Baubereich hinweg ausbreitet. Der Verteiltrichter hat einen unteren Schlitz zum Ausgeben/Verteilen des Pulvers, wobei der Schlitz eine solche Breite hat, dass das Pulver nicht frei aus dem Schlitz heraus rieseln kann, sondern den Schlitz überbrückt, so dass eine Kraft aufgebracht werden muss, um das Pulver durch den Schlitz hindurch zu drücken. Hierzu weist der Verteiltrichter ein oder mehrere Klingen auf, welche an einem Schaft montiert sind, wobei das Pulver aus dem Verteiltrichter ausgegeben wird, indem der Schaft rotiert wird, so dass das Pulver von der Klinge aus dem Schlitz heraus gedrückt wird.

EP 1 700 686 A2 offenbart eine Anlage zum Laser-Sintern, bei welcher unterschiedliche Pulver gründlich miteinander gemischt werden, um eine Pulvermischung an die Laser-Sinter-Maschine bereitzustellen.

WO2010/061174 A2, ein sog. Art. 54 (3)-Dokument, offenbart eine Laser-Sinter-Anlage mit einer Mischeinheit.

Es ist eine Aufgabe der Erfindung, eine Anlage bereitzustellen, mit der unterschiedliche Pulvermischungen bereitgestellt und verarbeitet werden können, welche kompakt ausgebildet ist und welche dennoch eine gute Mischqualität sicherstellt.

Zu diesem Zweck stellt die vorliegende Erfindung eine Anlage nach Anspruch 1 bereit. Weitere Ausführungsformen der Erfindung sind in den abhängigen Ansprüchen beschrieben.

Mit der erfindungsgemäßen Anlage kann ein Formkörper schichtweise aus einem Baumaterial aufgebaut werden durch Ausbilden von übereinander liegenden Schichten aus dem Baumaterial und durch selektives Verfestigen der jeweiligen Baumaterial-Schicht in wenigstens einem vorbestimmten Teilbereich derselben vor dem Ausbilden der nächstfolgenden Schicht.

Das Baumaterial weist ein Gemisch aus einer ersten Komponente und mindestens einer zweiten Komponente-auf. Die erste Komponente ist ein erstes körniges Material, z.B. ein Formsand, z.B. frischer Formsand.

Die zweite Komponente kann z.B. ein zweites körniges Material sein. Als zweites körniges Material können z.B. alter/recycelter Formsand, ein anderer Formsand (z.B. mit einer unterschiedlichen mittleren Korngröße und/oder mit einer unterschiedlichen Korngrößenverteilung und/oder mit unterschiedlicher Zusammensetzung) oder ein körniges Zuschlagmaterial (z.B. ein Inhibitor, z.B. KBFn, das bei der Herstellung eines Mg-Gussteils eingesetzt werden kann) eingesetzt werden. Es können auch mehrere der als zweites körniges Material genannten Komponenten eingesetzt bzw. dem ersten körnigen Material zugemischt werden, z.B. Altsand und ein Inhibitor.

Alternativ kann die zweite Komponente aber auch ein erstes flüssiges Material enthalten. Als Flüssigmaterial können z.B. ein Aktivator bzw. Härter und/oder ein flüssiges Zuschlagmaterial eingesetzt werden. Es können dem ersten körnigen Material auch ein oder mehrere der als zweites körniges Material genannten Komponenten und ein oder mehrere der als erstes flüssiges Material genannten Komponenten zugemischt werden.

Ein Baumaterialgemisch der oben angegebenen Art wird mit einem Beschichter auf eine Bauplattform aufgebracht. Hierzu muss das Baumaterialgemisch zunächst in den Beschichter eingefüllt werden, wozu der Beschichter in einer Beschickungsstation der Anlage in eine Beschickungsposition gefahren werden kann. Anschließend fährt der mit Baumaterial beladene Beschichter zum Aufbringen einer Baumaterial-Schicht auf die Bauplattform horizontal über die Bauplattform hinweg.

Das in den Beschichter eingefüllte Baumaterialgemisch sollte gut durchmischt sein, so dass die einzelnen Komponenten in der mit dem Beschichter erzeugten Baumaterial-Schicht homogen verteilt sind. Hierzu weist die Anlage eine Mischeinheit auf.

Die stationäre Mischeinheit weist einen Mischer auf, welcher eine in einem Mischbehälter angeordnete Mischkammer und ein in der Mischkammer angeordnetes Rührwerk aufweist.
Erfindungsgemäß ist der Mischer in der stationären Beschickungsstation der Anlage und dort oberhalb des Beschichters angeordnet und in die Anlage integriert. Insbesondere ist der Mischer in dem Anlagengehäuse angeordnet. Insbesondere ist die gesamte Mischeinheit in die Anlage integriert. Z.B. kann der Mischer bzw. die Mischeinheit an dem Anlagenrahmen befestigt sein, z.B. an einer vertikalen Säule des Anlagenrahmens. In den Mischer werden die erste Komponente und die zweite Komponente z.B. durch einen ihnen gemeinsamen Zuführschacht oder gesonderte Zuführleitungen zugeführt.

Nachdem die mindestens zwei Komponenten in dem Mischer ausreichend miteinander vermischt wurden, kann die frisch zubereite Baumaterialmischung durch eine Ausgabeöffnung der Mischkammer des Mischers in eine nach oben ausgerichtete Einfüllöffnung des in der Beschickungsposition angeordneten Beschichters eingespeist werden. Hierzu ist die Ausgabeöffnung in der Beschickungsstation der Anlage derart angeordnet, dass die Ausgabeöffnung in der Beschickungsposition des Beschichters, welche der Beschichter in der Beschickungsstation einnimmt, über dem Beschichter angeordnet ist. Zumindest weist der Beschichter einen Dosierschacht mit nach unten ausgerichtetem Ausgabeschlitz und vorzugsweise auch einen Vorlagebehälter auf, aus dem der Dosierschacht während der Beschichtungsfahrt des Beschichters befüllt und nachgefüllt wird. Die Ausgabeöffnung kann z.B. trichterförmig sein. Der Mischer weist eine verstellbare Armatur (= ein Absperrorgan zum selektiven Schließen/Sperren und Öffnen eines Leitungsabschnitts wie z.B. einen Schieber, eine Klappe oder ein Ventil) auf, wobei die Armatur über eine zentrale Steuereinrichtung/Regeleinrichtung angesteuert wird, um Baumaterial durch die Ausgabeöffnung in den Beschichter einzuspeisen, wenn sich der Beschichter in seiner Beschickungsposition befindet.

Von der zentralen Steuereinrichtung kann auch der Mischprozess in dem Mischer gesteuert werden, d.h. der Antrieb des Mischwerkzeugs. Ferner kann von der zentralen Steuereinrichtung auch der Dosierprozess gesteuert werden, d.h. die Dosier- bzw. Zuführvorrichtungen für die einzelnen Komponenten.

Das in dem Mischer zubereitete Baumaterialgemisch wird in der Beschickungsposition des Beschichters direkt aus der Mischkammer des Mischers in den horizontal verfahrbaren Beschichter eingespeist. Mit anderen Worten wird gemäß dieser Ausführungsform kein stationärer Vorrats/Zwischen-Behälter verwendet/benötigt, sondern das frisch zubereite Gemisch wird unmittelbar und auf kurzem Wege in den Beschichter gefördert. Der Beschichter kann z.B. den mitfahrenden Vorlagebehälter aufweisen, in den das Baumaterial eingefüllt wird, z.B. über einen auf dem Vorlagebehälter angebrachten Zuführtrichter.

Das erste körnige Material, z.B. Formsand, ist in einem ersten Dosierbehälter aufgenommen, der oberhalb des Mischers angeordnet ist und der mit dem Mischer in Verbindung steht, wobei mittels einer Dosiervorrichtung des ersten Dosierbehälters das erste körnige Material aus dem ersten Dosierbehälter in den Mischer hinein dosiert werden kann.

Eine solche Dosiervorrichtung kann z.B. eine Wiegezelle, die mit dem Dosierbehälter verbunden ist und dessen Gewicht erfasst, und eine verstellbare Armatur aufweisen, mit welcher der dem Mischer zugeführte Partikelstrom mengenmäßig eingestellt werden kann. Sowohl die Wiegezelle als auch die verstellbare Armatur können an die zentrale Steuereinrichtung angeschlossen sein.

Das zweite körnige Material, z.B. Altsand, ist in einem zweiten Dosierbehälter aufgenommen, welcher ebenfalls oberhalb des Mischers angeordnet ist und mit dem Mischer in Verbindung steht, wobei mittels einer Dosiervorrichtung des zweiten Dosierbehälters das zweite körnige Material aus dem zweiten Dosierbehälter in den Mischer hinein dosiert werden kann.

In der erfindungsgemäßen Mischeinheit sind sowohl der erste Dosierbehälter als auch der zweite Dosierbehälter vorgesehen. Hierbei können die beiden Dosierbehälter mit ihrer jeweiligen Ausgabeöffnung, die von der betreffenden Armatur beherrscht wird, unmittelbar in die Mischkammer des Mischbehälters münden. Alternativ kann zwischen den beiden Dosierbehältern und dem Mischer ein Zuführschacht vorgesehen sein, in den beide Ausgabeöffnungen der Dosierbehälter gemeinsam einmünden.

Der erste Dosierbehälter und der zweite Dosierbehälter können z.B. jeweils eine Vorrichtung zum Erzeugen von Unterdruck/Vakuum aufweisen, um den jeweiligen Behälter durch eine Saugleitung mit körnigem Material aus am Boden stehenden Säcken/Behältern zu befüllen.

Ferner kann ein weiterer Dosierbehälter zur Aufnahme eines pulverförmigen Zuschlagstoffes, z.B. ein Inhibitor, in der Mischeinheit bereitgestellt sein, welcher mittels einer Dosiervorrichtung wie z.B. eine Zellenradschleuse mit dem Mischer oder einem Zuführschacht desselben in Verbindung steht. Die Zellenradschleuse kann ebenfalls an die zentrale Steuereinrichtung angeschlossen sein. Auch dieser Dosierbehälter kann z.B. auf Wiegezellen stehen und/oder über eine Vakuumsaugleitung befüllt werden.

Zum Zuführen von Flüssigmaterial, z.B. Aktivator/Härter oder flüssigem Zuschlagmaterial, kann die Mischkammer des Mischers z.B. durch entsprechende Zuführvorrichtungen mit einem oder mehreren Flüssigkeitsbehältern in Verbindung stehen. Die jeweilige Zuführvorrichtung weist eine in die Mischkammer des Mischers mündende Flüssigkeitsleitung und eine Dosierpumpe auf, so dass das Flüssigmaterial in den Mischer dosiert werden kann. Die jeweilige Dosierpumpe kann an die zentrale Steuereinrichtung angeschlossen sein.

Mit der erfindungsgemäßen Anlage kann das Baumaterial während des Baubetriebs direkt in der Anlage frisch zubereitet und dem Beschichter insbesondere unmittelbar nach der Zubereitung auf kurzem Wege zur Verfügung gestellt werden. Eine externe Gemischzuführleitung kann entfallen. Somit entfallen lange Leitungswege und aufwendige Fördersysteme zur Förderung der Baumaterial-Mischung von einer externen, neben der Anlage angeordneten Mischeinrichtung zu dem Beschichter bzw. zu einem oberhalb des Beschichters angeordneten stationären Vorratsbehälter. Die aufwendige Reinigung der Förderleitung vor/nach jedem Wechsel des Baumaterialgemischs entfällt ebenfalls.,Vielmehr können die einzelnen Komponenten in Reinform zu der oberhalb des Beschichters in der Beschickungsstation der Anlage angeordneten Mischeinheit gefördert werden - Feststoffe/Pulver z.B. über eine Saugleitung, Flüssigkeiten z.B. über Pumpen -, und die resultierende Baumaterial-Mischung kann direkt/unmittelbar in der Anlage fertiggestellt werden und nach ihrer Fertigstellung in den Beschichter eingespeist werden, z.B. durch Öffnen einer Klappe oder eines Schiebers, welcher am Mischerboden bzw. in einem unteren Bereich des Mischers angebracht ist. Die Förderung der einzelnen Komponenten in Reinform zu der Mischeinheit ist in der Regel einfacher zu handhaben als die Förderung einer (extern) zubereiteten Baumaterial-Mischung (z.B. ein empfindliches Fest-Flüssig-Gemisch) zu einem stationären Vorratsbehälter. Z.B. kann es bei einer mechanischen Förderung der Mischung zu dem stationären Vorratsbehälter (z.B. mittels einer Förderschnecke) zu einer Veränderung der Korngrößenverteilung und/oder zum Entmischen der Komponenten kommen. Z.B. kann eine Vakuum- bzw. Saug-Förderung eines Fest-Flüssig-Gemisches dazu führen, dass die Eigenschaften des Gemisches verändert werden, insbesondere kann das Gemisch austrocknen. Zudem kann ein "Entmischen" vermieden werden, da die Mischung unmittelbar nach ihrer Fertigstellung in den Beschichter gegeben werden kann. Neben der möglichen Einsparung des aufwendigen Fördersystems zur Förderung der Baumaterial-Mischung zu dem Vorrats/Dosier-Behälter kann daher ferner die Qualität der Baumaterial-Mischung verbessert werden bzw. auf einem konstanten Niveau gehalten werden.

Die Mischeinheit kann in einer Ausführungsform von der zentralen Steuereinheit derart gesteuert sein, dass der Mischer und/oder die Dosiervorrichtungen der Dosierbehälter erst in Betrieb gesetzt werden, wenn der Beschichter sich in der Beschickungsstation befindet. Es kann auch eine Ablaufsteuerung vorgesehen sein, durch welche der zeitliche Ablauf der Zuführung der Gemischkomponenten in den Mischer gesteuert wird. So kann z.B. vorgesehen sein, dass zunächst die körnigen Baumaterial-Komponenten miteinander vermischt werden, bevor eine flüssige Komponente und/oder ein Zuschlagstoff hinzugefügt wird.

Die Ausgabeöffnung des Mischers kann von einer verstellbaren Armatur beherrscht sein, von welcher die Gemischzuführung in den Beschichter erst freigegeben wird, wenn die Komponenten gründlich miteinander vermischt sind. Es ist weiter möglich, die Gemischkomponenten gesteuert in vorbestimmten Mischungsverhältnissen zeitlich kontinuierlich in den Mischer einzuführen, der das Gemisch zeitlich kontinuierlich zubereitet und in den Beschichter ausgibt.

Die Erfindung wird im Folgenden anhand verschiedener Ausführungsformen mit Bezugnahme auf die Zeichnung näher erläutert. In der Zeichnung zeigen:
Figur 1 eine Perspektivansicht auf die vordere Stirnseite einer erfindungsgemäßen **Anlage 100** zum schichtweisen Aufbau eines Formköpers gemäß einer ersten Ausführungsform der Erfindung,
Figur 2 eine zweite Perspektivansicht der erfindungsgemäßen Anlage aus Fig. 1,
Figur 3 eine dritte Perspektivansicht der Anlage aus Fig. 1, wobei das Gehäuse der Anlage weggelassen ist,
Figur 4 eine vierte Perspektivansicht der Anlage aus Fig. 1, wobei das Gehäuse der Anlage weggelassen ist,
Figur 5 eine fünfte Perspektivansicht der Anlage aus Fig. 1, wobei das Gehäuse der Anlage weggelassen ist,
Figur 6 eine Perspektivansicht einer erfindungsgemäßen Anlage zum schichtweisen Aufbau eines Formköpers gemäß einer zweiten Ausführungsform der Erfindung,
Figur 7 eine Perspektivansicht auf die vordere Stirnseite und eine benachbarte Seitenwand einer erfindungsgemäßen **Baubox** 200,
Figur 8 die Ansicht aus Figur 7, wobei die verkleidungswand an der vorderen Stirnseite weggelassen ist, um den Fahrantrieb und den Hubantrieb der Baubox zu zeigen,
Figur 9 eine Perspektivansicht auf die vordere Stirnseite der Baubox aus den Figuren 7 und 8, wobei die Baubox auf dem Schienensystem der Anlage angeordnet ist und wobei die Baubox in die Entpackungsposition gefahren ist,
Figur 10 eine Perspektivansicht auf die vordere Stirnseite sowie eine weitere Seitenwand der Baubox, welche der in Figur 7 gezeigten Seitenwand abgewandt ist,
Figur 11 eine Perspektivansicht des Anlagenrahmens und der daran angebrachten Komponenten des Bauboxfixierungssystems,
Figur 12 eine Frontalansicht auf die vordere Stirnseite der Baubox, wobei sich die Baubox in der Bauposition befindet und an dem Anlagenrahmen fixiert ist,
Figur 13 eine Perspektivansicht auf die Oberseite der Baubox bzw. auf die darin aufgenommene Bauplattform, wobei sich die Baubox in der Bauposition befindet,
Figur 14 eine Detailansicht der anlagenfesten Baufeldabdeckung, welche sich unter Ausbildung einer Labyrinthdichtung entlang einer Seitenwand der Baubox erstreckt,
Figur 15 eine Detailansicht der zwischen der anlagenfesten Baufeldabdeckung und der Baubox ausgebildeten Labyrinthdichtung,
die Figuren 16 und 17 jeweils eine Perspektivansicht einer erfindungsgemäßen **Mischvorrichtung 300,**
Figur 18 eine Perspektivansicht auf die vordere Stirnseite eines erfindungsgemäßen **Beschichters 400,** wobei der Beschichter in seiner Betriebsposition ist, d.h. der Dosierschacht und der Vorlagebehälter des Beschichters sind jeweils an dem Beschichter-Träger befestigt,
Figur 19 eine Perspektivansicht des Beschichters aus Fig. 18 von vorne, wobei der Vorlagebehälter des Beschichters von dem Beschichter-Träger weg in eine Reinigungsposition geschwenkt ist, um z.B. die Verteilerschnecke des Vorlagebehälters zu reinigen,
Figur 20 eine Perspektivansicht des Beschichters aus Fig. 18 von hinten, wobei der Vorlagebehälter des Beschichters zusammen mit dem Zuführtrichter in eine Reinigungsposition geschwenkt ist, um z.B. die Zuführöffnung des Dosierschachts zu reinigen,
Figur 21 eine Perspektivansicht des Beschichters aus Fig. 18, wobei der Beschichter in die Anlage eingebaut ist und in seiner Betriebsposition ist und wobei die vordere Stirnwand der einzelnen Beschichter-Komponenten weggelassen ist,
Figur 22 eine Perspektivansicht einer erfindungsgemäßen **Druckvorrichtung 500,** welche einen Druckkopfträger und einen daran aufgehängten Druckkopf aufweist,
Figur 23 eine Detailansicht des Druckkopfes aus Fig. 22 und dessen Aufhängung an dem Druckkopfträger,
Figur 23a eine schematische Unteransicht des Druckkopfkopfes, um die Anordnung der Druckkopfdüsen zu veranschaulichen,
Figur 24 eine Perspektivansicht einer erfindungsgemäßen **Beschichter-Reinigungsvorrichtung 600,**
Figur 25 eine Perspektivansicht der Beschichter-Reinigungsvorrichtung aus Figur 24 und des Beschichters,
Figur 26 eine Perspektivansicht auf eine Seitenwand des Anlagengehäuses,
Figur 27 eine Perspektivansicht von dem horizontal verfahrbaren Druckkopf in seiner Ruhe- bzw. Parkposition und von einer benachbart zu dem Druckkopf angeordneten erfindungsgemäßen **Druckkopf-Reinigungsvorrichtung 700,** welche gemäß der gezeigten Ausführungsform zwei seitlich nebeneinander angeordnete Wischlippen aufweist,
Figur 28 eine Perspektivansicht der Druckkopf-Reinigungsvorrichtung aus Figur 27, wobei sich die zwei Wischlippen in der Druckkopf-Reinigungsposition befinden,
Figur 29 eine Perspektivansicht der Druckkopf-Reinigungsvorrichtung aus Figur 27, wobei sich die zwei Wischlippen in der Wischlippen-Regenerationsposition befinden, und
die Figuren 30a bis 30f verschiedene Ausführungsformen der erfindungsgemäßen Druckkopf-Reinigungsvorrichtung.

### Anlage 100

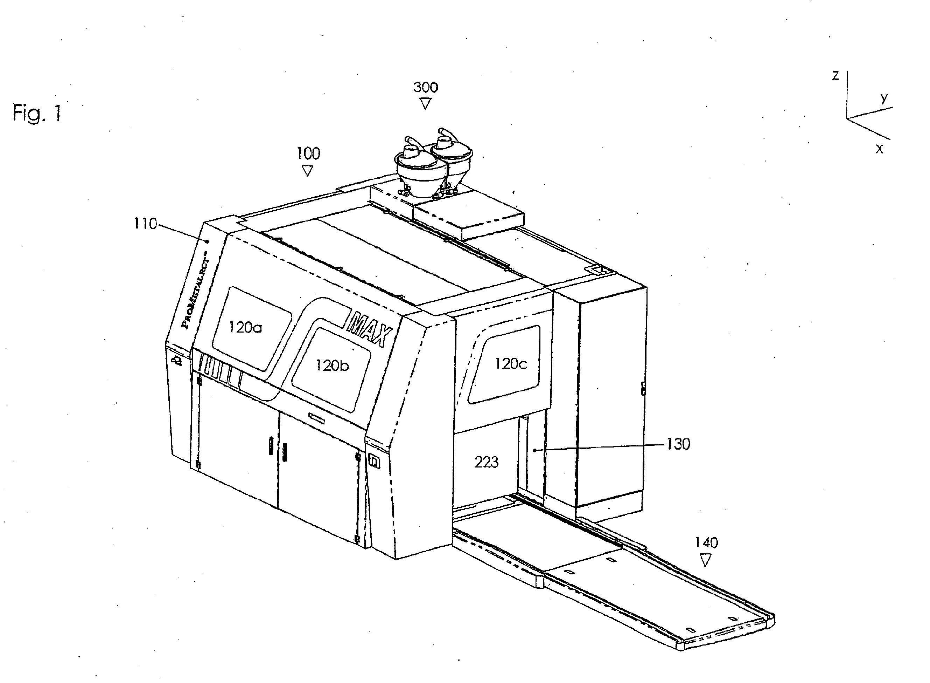

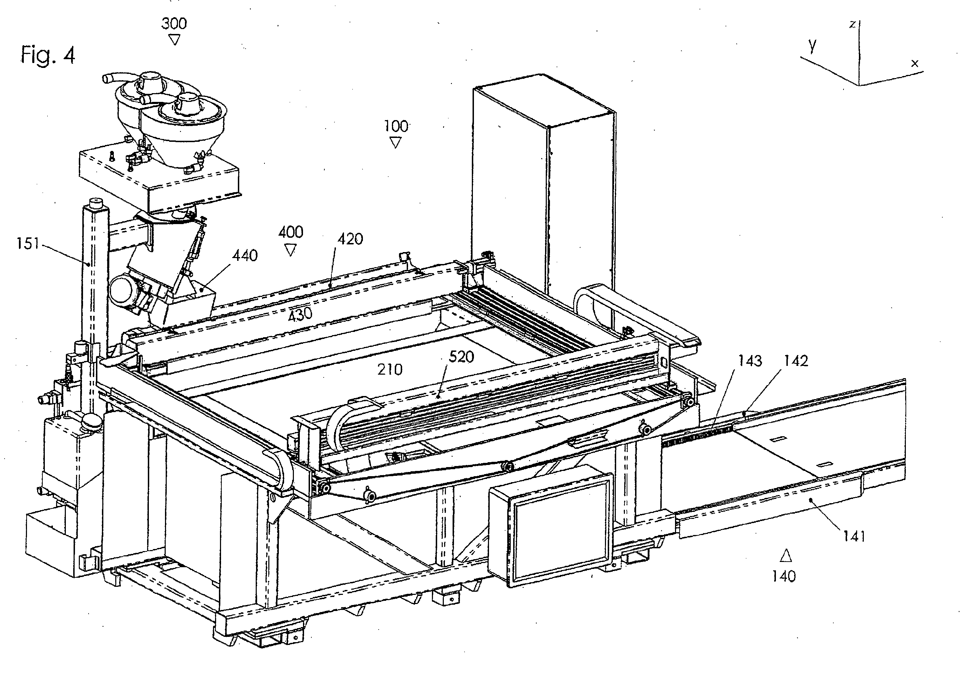

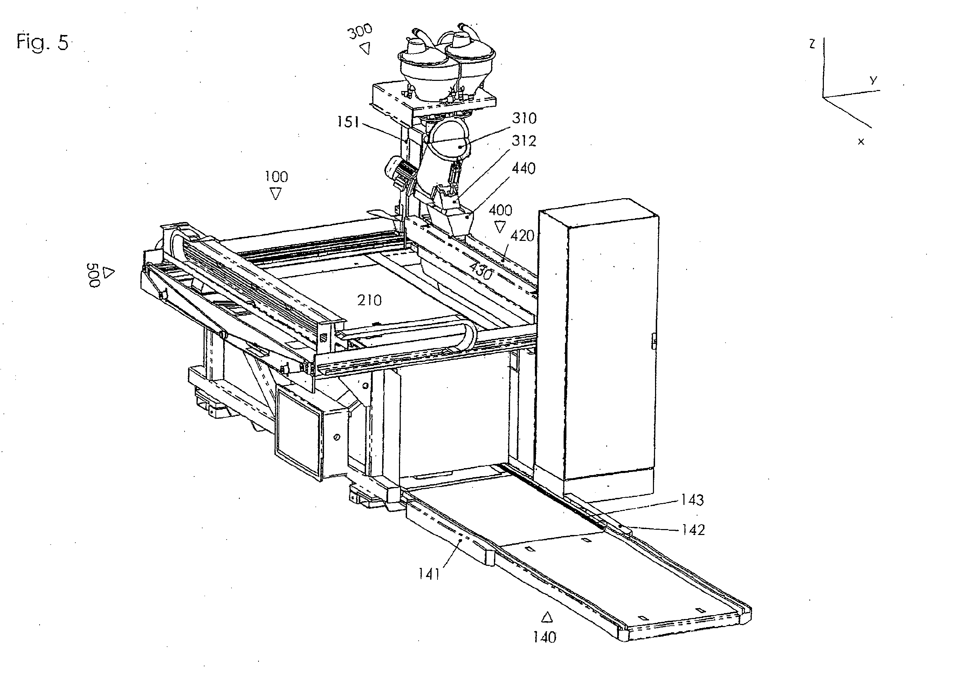

Die **Figuren 1 bis 5** zeigen eine Rapid-Prototyping-Anlage 100 gemäß einer ersten Ausführungsform der Erfindung, welche zum selektiven Verfestigen der Baumaterial-Schichten mit einer Druckvorrichtung ausgestattet ist. An dieser Stelle wird angemerkt, dass die meisten Komponenten der Anlage 100 auch auf andere Rapid-Prototyping-Anlagen anwendbar sind. Zum Beispiel können die Baubox 200, die Mischvorrichtung 300, der Beschichter 400 und die Beschichter-Reinigungsvorrichtung 600 problemlos, ggf. mit geringfügigen Modifikationen, in einer Anlage zum Lasersintern eingesetzt werden. Mit anderen Worten kann die Anlage 100 z.B. zu einer Laser-Sinter-Anlage umgerüstet werden, indem der Druckkopf 500 durch eine Strahlungsquelle bzw. einen Laser ersetzt wird.

Mit der Anlage 100 kann ein Formkörper, z.B. eine Gussform, unmittelbar aus zuvor generierten CAD-Daten hergestellt werden durch Ausbilden von übereinander liegenden Baumaterialschichten und durch selektives Verfestigen von Teilbereichen der jeweiligen Baumaterialschicht vor dem Ausbilden der nächsten Schicht.

Der Formkörper bzw. die Baumaterialschichten werden auf einer Bauplattform 210 einer Baubox 200 aufgebaut. Die Bauplattform 210 ist höhenverstellbar und kann vor dem Auftragen einer neuen Baumaterialschicht um eine schichtdicke abgesenkt werden, so dass die Arbeitsebene (= oberste Baumaterialschicht) stets auf dem selbem Niveau ist.

Das Baumaterial weist Partikelmaterial auf. Als Partikelmaterial kann zum Beispiel Sand eingesetzt werden, insbesondere ein Sand wie er üblicherweise in der Gießereitechnik verwendet wird. Das Aufbringen der jeweiligen Baumaterialschicht erfolgt mit einem Beschichter 400, der horizontal über die Bauplattform 210 hin verfahrbar ist. Der Beschichter 400 wird über eine Mischvorrichtung 300 mit Baumaterial gespeist.

Zur selektiven Verfestigung der jeweiligen Baumaterialschicht wird eine Druckvorrichtung 500 mit einem horizontal verfahrbaren Druckkopf 510 eingesetzt, mit dem ein geeignetes Bindemittel auf die zu verfestigende Schicht aufgegeben/aufgedruckt werden kann, wozu der Druckkopf 510 mäanderförmig über die Baumaterialschicht hinweg gefahren wird. Das Partikelmaterial "verklebt" bzw. verfestigt das Partikelmaterial selektiv. Als Bindemittel kann z.B. ein Harz eingesetzt werden, z.B. Furanharz. Zudem ist es möglich, ein Mehrkomponentenbindemittel zu verwenden, wobei eine erste Bindemittel-Komponente (z.B. das Harz) über den Druckkopf 510 aufgedruckt wird, und wobei eine zweite Bindemittel-Komponente (z.B. ein Aktivator oder Härter) mit dem Partikelmaterial vermengt ist. Das durch den Drucker selektiv aufgedruckte Harz reagiert mit dem in der obersten Sandschicht vorliegenden Härter, wodurch das Harz aushärtet und dadurch einzelne Sandkörner miteinander verbindet/verklebt. Zudem wird durch das aushärtende Harz der zu verfestigende Abschnitt der obersten Schicht mit dem zu verfestigenden Abschnitt der unmittelbar unter der oberen Schicht angeordneten Schicht verbunden.

Vereinfacht wiedergegeben kann ein Formteil demnach z.B. wie folgt ausgebildet werden:
1. Bereitstellen einer Baumaterialmischung, enthaltend Formsand und Härter, unter verwendung des Mischers 300,
2. Chargenweiser/Schichtweiser Auftrag des Baumaterials auf die Bauplattform 210 des Baubehälters 200 mit Hilfe des Beschichters 400,
3. Eindosieren von Harz in die oberste Baumaterialschicht unter Verwendung der Druckvorrichtung 500
4. und Wiederholen der Schritte 2 und 3, bis der Formkörper fertiggestellt ist.

Der Beschichter 400 und die Druckvorrichtung 500 sind in einem Gehäuse 110 untergebracht, in dem der oben beschriebene Bauprozess abläuft. Das Gehäuse 110 weist Fenster 120a-120d auf zum Beobachten des Prozessablaufs. Ferner weist das Gehäuse 110 eine stirnseitige Baubox-Einfahr/Ausfahr-Öffnung 130 auf, durch welche die Baubox 200 in das Gehäuse 110 hinein und aus diesem heraus gefahren werden kann. Wie aus Figur 1 ersichtlich ist, wird die Baubox-Einfahr/AusfahrÖffnung 130 durch eine hintere Stirnwand/Verkleidungswand 223 der Baubox 200 geschlossen, wenn die Baubox 200 in der Bauposition fixiert ist. Mit anderen Worten bildet die Baubox 200 in der Bauposition einen Teil der Anlagenverkleidung, so dass keine zusätzliche Tür oder Schutzvorrichtung notwendig ist.

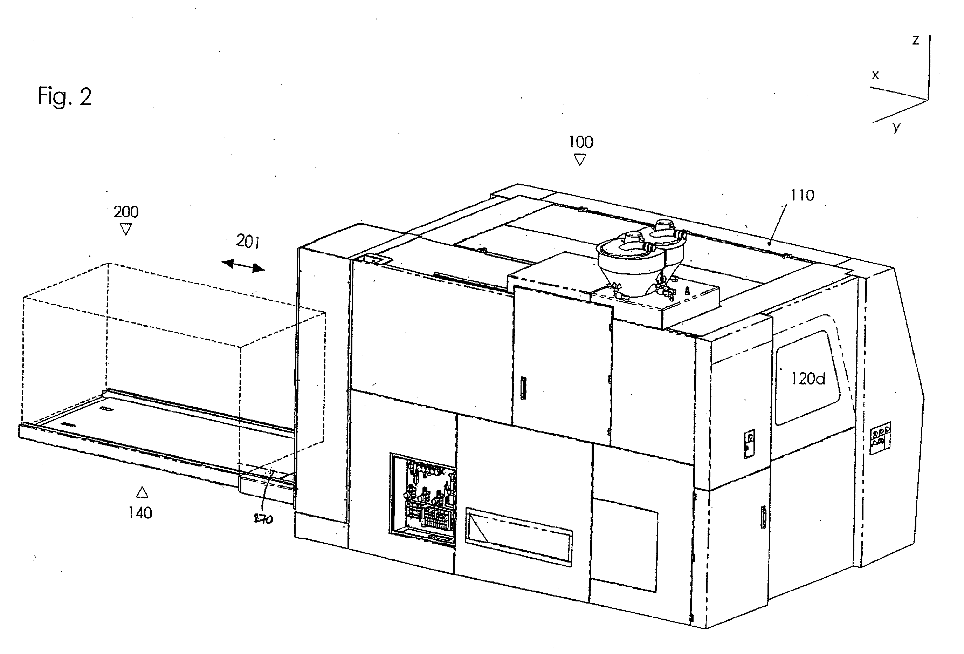

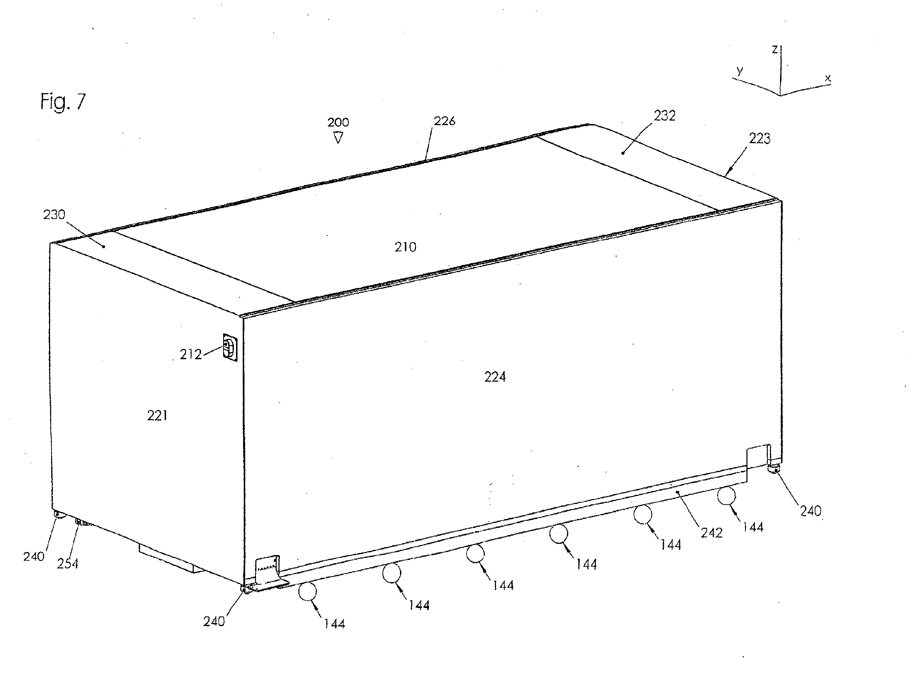

Nach Fertigstellung des Formköpers wird die Baubox 200 aus dem Gehäuse 110 heraus in die in Figur 2 durch gestrichelte Linien angedeutete Entpackungsposition gefahren. D.h., die Baubox 200 ist in Richtung des Pfeils 201 zwischen einer Bauposition und einer Entpackungsposition verfahrbar (siehe Figur 2). In der Entpackungsposition kann der fertige Formkörper ausgepackt und freigelegt werden, z.B. durch Anheben bzw. nach oben Fahren der Bauplattform 210 und durch Wegblasen oder Absaugen des losen, nicht verfestigten Formsands. Das Anheben bzw. Absenken der Bauplattform 210 in der Entpackungsposition kann automatisiert erfolgen oder manuell über einen Druckknopf 212 gesteuert werden (siehe Figur 7). Anschließend wird der Formkörper z.B. per Hand entnommen und ggf. einer abschließenden Reinigung unterzogen, wie z.B. einem Abbürsten. Daraufhin ist die Baubox 200 frei und kann erneut in das Gehäuse 110 bzw. in ihre Bauposition gefahren werden, so dass der nächste Baujob ausgeführt werden kann.

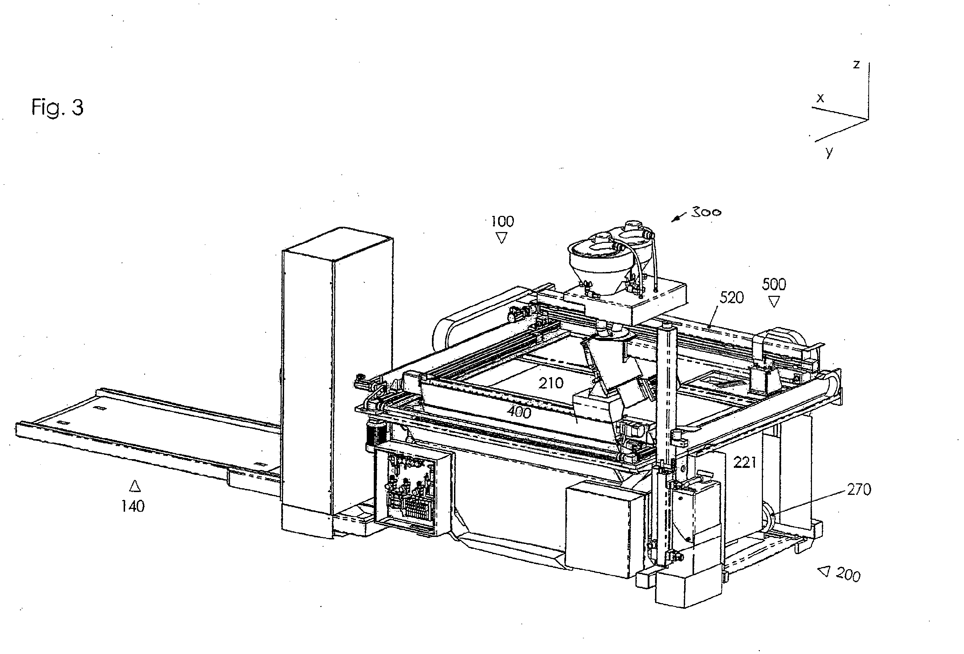

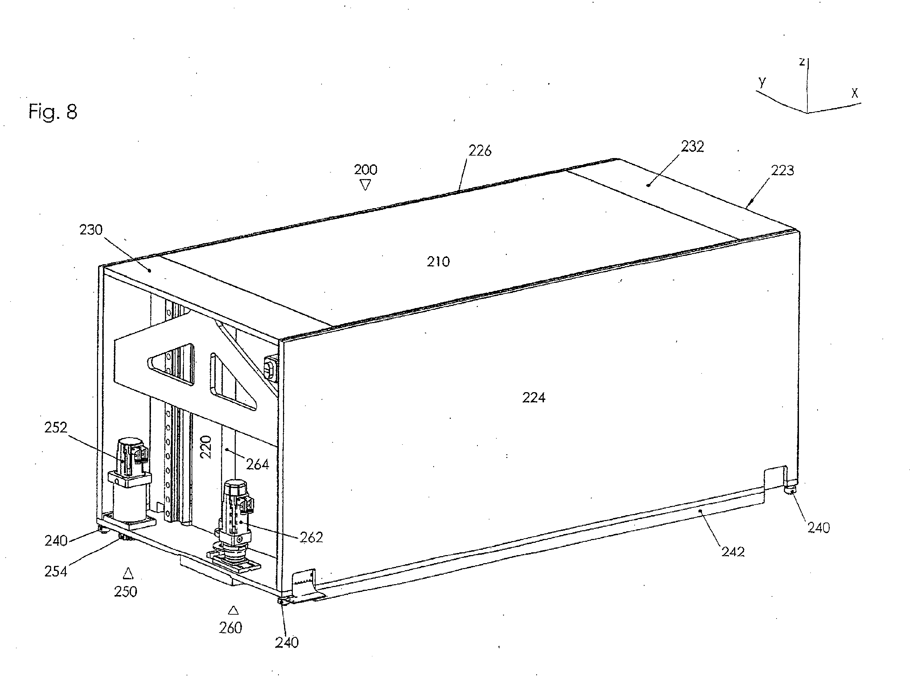

Die Baubox 200 wird somit ständig zwischen der Bauposition und der Entpackungsposition hin- und hergefahren, wozu die Baubox 200 auf einem Schienensystem 140 angeordnet ist (sog. einfacher Shuttle-Betrieb). D.h., die in den Figuren 1 bis 5 gezeigte Anlage 100 weist genau eine Baubox 200 auf. Die Baubox 200 ist somit nicht als Wechselbehälter ausgebildet, sondern vielmehr anlagenfest ausgebildet; insbesondere ist die Baubox 200 selbstfahrend ausgebildet, wozu sie einen bauboxseitigen, d.h. an der Baubox angebrachten, Fahrantrieb 250 mit eigenem Fahrmotor 252 aufweist (siehe Figur 8 sowie die unten stehende Beschreibung der Baubox), der über eine in das Gehäuse führende Schleppkette bzw. Schleppkabel 270 (siehe Figuren 2 und 3) mit Strom versorgt wird; ferner weist die Baubox 200 einen bauboxseitigen Hubantrieb 260 mit eigenem Hubmotor 262 auf, welcher ebenfalls über die Schleppkette 270 mit Strom versorgt wird (siehe hierzu Figur 8 sowie die unten stehende Beschreibung der Baubox).

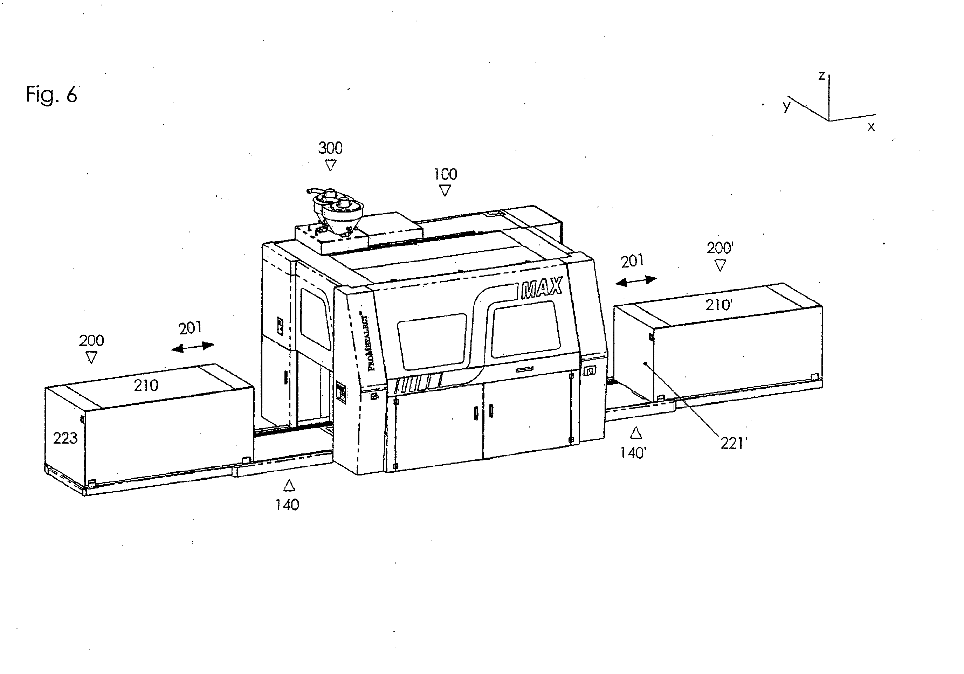

Wie in **Figur 6** gezeigt ist, kann die Anlage 100 gemäß einer anderen Ausführungsform der Erfindung aber auch eine zweite Baubox 200' aufweisen, die entlang eines zweiten Schienensystems 140 (oder eines gemeinsamen Schienensystems) und durch eine zweite stirnseitige Baubox-Einfahr/AusfahrÖffnung in dem Gehäuse 110, welche der ersten Baubox-Einfahr/Ausfahr-Öffnung abgewandt ist, entlang des Pfeils 201 zwischen der gemeinsamen Bauposition und einer zweiten Entpackungsposition hin- und herfahrbar ist. Folglich kann nach der Fertigstellung eines ersten Formkörpers unter Verwendung der ersten Baubox 200, die erste Baubox 200 in die ihr zugeordnete erste Entpackungsposition gefahren werden, um den Formkörper auszupacken. Sobald die Anlage 100 frei ist, d.h. die erste Baubox 200 aus der Anlage heraus gefahren ist, kann die zweite Baubox 200' in die Bauposition gefahren und fixiert werden, um einen zweiten Formkörper unter Verwendung der zweiten Baubox 200' herzustellen (sog. doppelter Shuttle-Betrieb). Mit dem doppelten Shuttle-Betrieb kann die Anlage 100 quasi-kontinuierlich betrieben werden, wohingegen mit dem einfachen Shuttle-System lediglich ein Batchbetrieb möglich ist. Die Baubox 200' ist wie die Baubox 200 anlagenfest und selbstfahrend ausgebildet. Im Übrigen entspricht die in Figur 6 gezeigte Anlage 100 der in den Figuren 1 bis 5 gezeigten Anlage 100.

Die Figuren 3 bis 5 zeigen die Anlage 100 ohne das Gehäuse 110. Die Baubox 200 befindet sich in der Bauposition, und die Bauplattform 210 ist nach oben gefahren. Der Druckkopf 510 der Druckvorrichtung 500 und der Beschichter 400 befinden sich jeweils in ihrer Parkposition. In der jeweiligen Parkposition sind Beschichter 400 und Druckvorrichtung 500 an gegenüberliegenden Seiten der Bauplattform 210 angeordnet, insbesondere sind der Druckkopfträger 520 und der Beschichter-Träger 430 parallel zueinander sowie parallel zu den Längsseiten der Bauplattform 210 angeordnet. Die beiden Träger 430 und 520 sind in y-Richtung über die Bauplattform 210 hin verfahrbar, d.h. in Querrichtung der Bauplattform 210 und senkrecht zu der Verfahrrichtung der Baubox 200. Ferner kann der Druckkopf 510 in x-Richtung, d.h. in Längsrichtung der Bauplattform 210, entlang des Druckkopfträgers 520 verfahren werden. In einer alternativen Ausführungsform können der Druckkopf-Träger 520 und der Beschichter-Träger 430 allerdings auch senkrecht zu der Längsachse der Bauplattform 210 angeordnet sein, d.h. an den sich gegenüberliegenden kurzen Seiten der Bauplattform 210, so dass sie in x-Richtung über die Bauplattform 210 hinweg verfahrbar sind. Die Mischvorrichtung 300 ist an einer vertikalen Säule 151 des Anlagenrahmens 150 befestigt und zwar oberhalb des Vorlagebehälters 410 und oberhalb des Zuführtrichters 440 des Beschichters 400, wobei die Ausgabeöffnung 312 des Mischers 310 in der Beschickungsposition des Beschichters 400 über dem Zuführtrichter 440 angeordnet ist, um den Vorlagebehälter 410 über den Zuführtrichter 440 mit frisch zubereitetem Baumaterial zu beschicken.

Die Anlage 100 weist ferner eine nicht gezeigte zentrale Steuereinrichtung auf, mit der der Prozessablauf und die einzelnen Komponenten wie Mischvorrichtung 300, Beschichter 400, Druckvorrichtung 500, Beschichter-Reinigungsstation 600 und Druckkopf-Reinigungsstation 700 gesteuert werden können. Im Sinne dieser Anmeldung soll dabei von dem Begriff "Steuern" auch ein "Regeln" umfasst sein, d.h. die Steuereinrichtung kann auch eine Regelungseinrichtung sein.

### Baubox 200

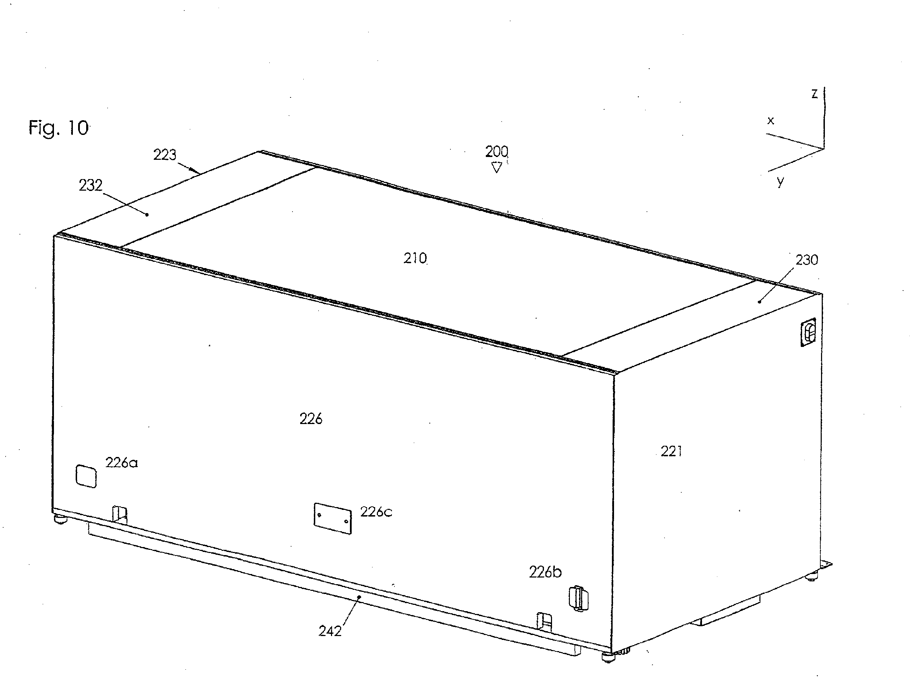

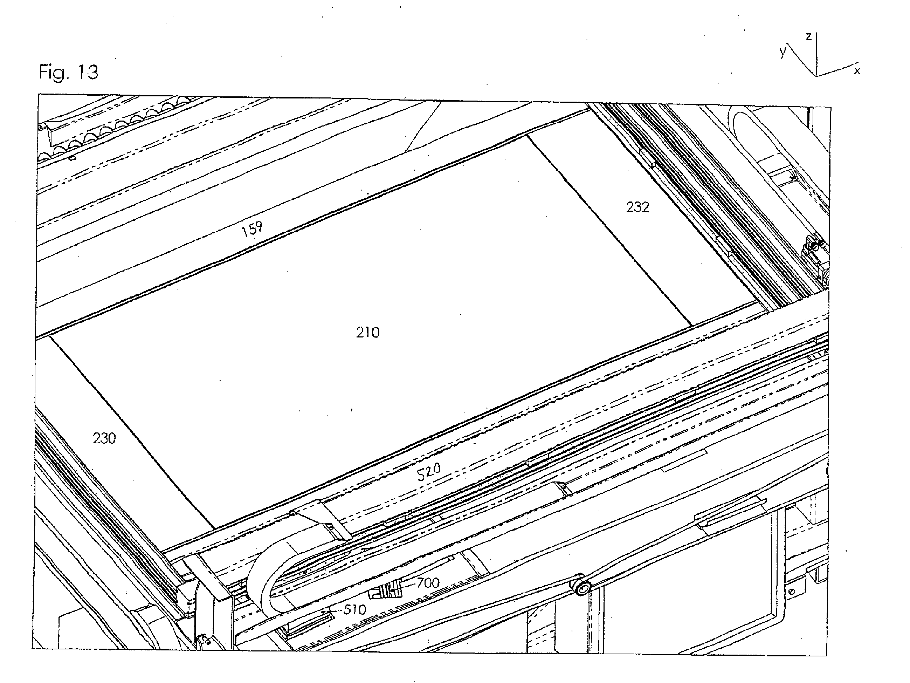

Im Folgenden werden unter Bezugnahme auf die Figuren 7 bis 15 die Baubox 200 (welche alternativ auch als Baubehälter 200 bezeichnet wird) sowie das für die Baubox 200 vorgesehene Schienensystem 140 (insbesondere Figuren 7 bis 9), das Bauboxfixierungssystem zum Ausrichten und Fixieren der Baubox 200 an dem Anlagenrahmen 150 (Figuren 10 bis 12) sowie die Baufeldabdeckung (Figuren 13 bis 15) im Detail beschrieben.

Wie in **Figur 7** gezeigt ist, weist die Baubox vier Seitenwände 221, 223, 224 und 226 auf, welche sich jeweils in vertikaler Richtung erstrecken. Die vordere Seitenwand/Stirnwand 221 dient als Verkleidungswand und bildet mit einer vertikalen vorderwand 220 der Baubox einen Zwischenraum zur Aufnahme des Fahrantriebs 250 und des Hubantriebs 260 aus (siehe Figur 8). Auf die gleiche Weise dient die hintere Seitenwand/Stirnwand 223 als Verkleidungswand und bildet mit einer vertikalen Rückwand (nicht gezeigt) der Baubox einen zweiten Zwischenraum zur Aufnahme eines weiteren Hubantriebs (nicht gezeigt) aus. Die beiden Seitenwände 224 und 226 bilden zusammen mit der Vorderwand 220 und der Rückwand einen nach oben und unten offenen Behälter bzw. Begrenzungsrahmen aus, der im Längsschnitt rechteckig ausgebildet ist, d.h. der Begrenzungsrahmen hat zwei kurze Seitenwände sowie zwei lange Seitenwände.

Ferner weist die Baubox 200 eine erste Baufeldplatte/ Abdeckungsplatte 232 und eine zweite Baufeldplatte/ Abdeckungsplatte 230 auf, welche sich jeweils in horizontaler Richtung zwischen und senkrecht zu den beiden langen Seitenwänden 224 und 226 erstrecken und den ersten bzw. zweiten Zwischenraum nach oben abdecken. Wenn sich die Baubox 200 in der Bauposition befindet, bilden die beiden Platten 230, 232 einen der Teil der Baufeldabdeckung aus (siehe z.B. Figur 13).

Ferner weist die Baubox 200 eine Bauplattform 210 auf, die einen in vertikaler Richtung höhenverstellbaren Behälterboden ausbildet, wozu die Bauplattformunterseite auf einem Bauplattform-Träger (nicht gezeigt), z.B. einem Tragarm, abgestützt ist, der über einen Hubantrieb in vertikaler Richtung verfahrbar ist. Die Bauplattformoberseite bildet die Arbeitsfläche, auf der das herzustellende Objekt aufgebaut wird. Während des Bauprozesses, d.h. wenn sich die Baubox 200 in der Bauposition befindet, wird die Bewegung der Bauplattform durch die zentrale Steuereinrichtung gesteuert. Ferner kann die Position der Bauplattform 210 über einen an der vorderen Stirnwand 220 angebrachten Druckknopf 212 manuell eingestellt werden.

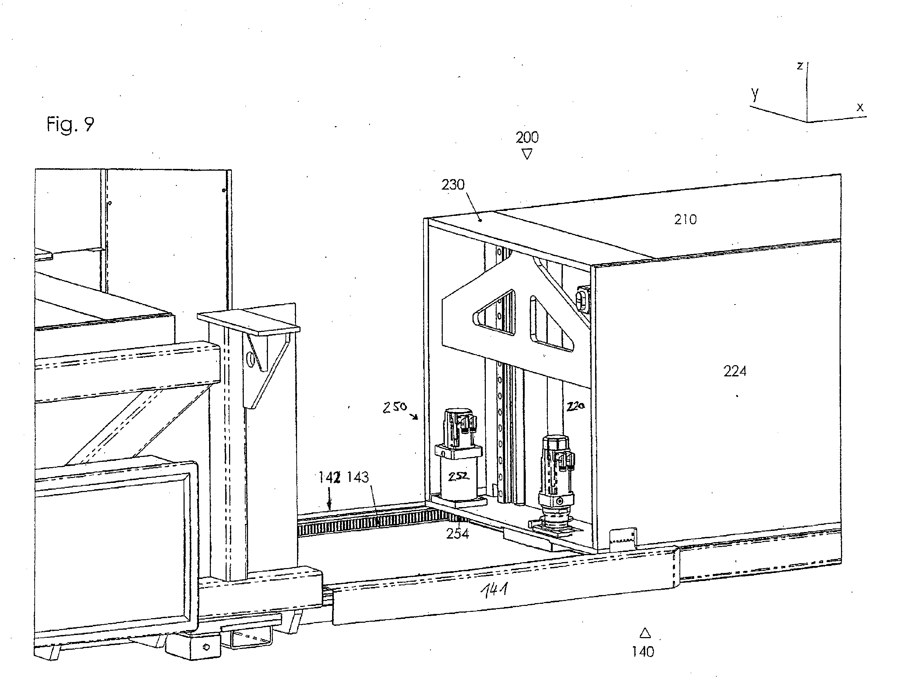

An der Unterseite der Baubox 200 sind eine Mehrzahl von seitlichen Führungsrollen 240 angebracht (gemäß dieser Ausführungsform vier), welche mit dem Schienensystem 140 zusammenwirken, um eine zentrierung/Ausrichtung der Baubox 200 in/entlang der y-Richtung, d.h. in Baubox-Querrichtung, zu ermöglichen. Die Führungsrollen 240 können z.B. an den Innenseiten der Schienen.141, 142 abrollen. Ferner ist an der Unterseite bzw. unteren Stirnfläche/Randfläche der ersten Seitenwand 224 sowie an der Unterseite der zweiten Seitenwand 226 jeweils eine leistenförmige Gleitkufe 242 angebracht, wobei die beiden Gleitkufen 242 auf an den Innenseiten der Schienen 141, 142 angebrachten Rollen 144 stehen, welche in Figur 7 gestrichelt dargestellt sind. Ferner ist an der Bauboxunterseite ein Zahnrad 254 angebracht, das Teil des in Figur 8 gezeigten bauboxseitigen Fahrantriebs 250 ist und das in die in Figur 9 gezeigte Zahnstange 143 des Schienensystems 140 eingreift. Bei einer Drehbewegung des Zahnrads 254 wird die Baubox 200 daher in x-Richtung über die Rollen 144 hinweg bewegt.

**Figur 8** zeigt die Baubox 200 ohne die vordere Stirnwand 221. Wie aus Figur 8 ersichtlich ist, weist die Baubox 200 einen in die Baubox integrierten Baubox-Fahrantrieb 250 sowie einen in die Baubox 200 integrierten Bauplattform-Hubantrieb 260 auf. In der gezeigten Ausführungsform sind der Baubox-Fahrantrieb 250 und der Bauplattform-Hubantrieb 260 an der vorderen Stirnseite der Baubox 200 angebracht (zwischen der vorderen Stirnwand 221 und der parallel zu dieser angeordneten Vorderwand 221). Dies hat den Vorteil, dass die Schleppkette/Schleppkabel 270 für die elektrischen Anschlüsse (vgl. Figuren 2 und 3) kürzer ausgeführt werden kann und einfacher zu führen ist, da die vordere Stirnseite 220 in der Entpackungsposition der Baubox dem Gehäuse 110 der Anlage zugewandt ist. Die beiden Antrieb 250, 260 können aber auch an einer anderen Stelle positioniert sein, z.B. jeweils an der hinteren Stirnseite. Alternativ können die beiden Antriebe 250, 260 auch auf die vordere und die hintere Stirnseite verteilt sein. Gemäß einer weiteren Ausführungsform der Erfindung sind wie in Figur 8 gezeigt an der vorderen Stirnseite ein Fahrantrieb 250 sowie ein Hubantrieb 260 vorgesehen, wobei an der hinteren Stirnseite ein zusätzlicher Hubantrieb (nicht gezeigt) bereitgestellt ist, der mit dem Hubantrieb 260 synchronisiert ist. In einer weiteren Ausführungsform kann zudem auch ein zusätzlicher Fahrantrieb an der hinteren Stirnseite vorgesehen sein.

Mit dem Baubox-Fahrantrieb 250 kann die Baubox 220 zwischen der Bauposition und der Entpackungsposition im oben erwähnten einfachen Shuttle-Betrieb hin- und hergefahren werden (in x-Achsenrichtung, d.h. in Längsrichtung der Baubox). Aufgrund des eigenen Fahrantriebs 250 kann eine separate Vorrichtung zum Ein- und Ausfahren der Baubox 200 in das bzw. aus dem Gehäuse 110 entfallen. Zudem kann die Aufbauhöhe reduziert werden. Der Baubox-Fahrantrieb 250 weist einen Fahrantriebs-Motor 252 auf, der Bestandteil der Baubox 200 ist. Die Stromversorgung des Fahrantrieb-Motors 252 erfolgt über eine Schleppkette 270 (vgl. Figuren 2 und 3). Der Motor 252 treibt das bereits oben beschriebene Zahnrad 254 an, das in die Zahnstange 143 eingreift. Der Fahrantrieb 250 ist mit der zentralen Steuereinrichtung verbunden (ebenfalls über die Schleppkette 270), so dass das Verfahren der Baubox 200 automatisiert erfolgen kann.

Der Bauplattform-Hubantrieb 260 weist einen Hubantrieb-Motor 262 auf, der Bestandteil der Baubox 200 ist. Der Bauplattform-Hubantrieb 260 weist ferner eine drehbar angeordnete Schraubspindel 264 und eine Spindelmutter (nicht gezeigt) auf, welche durch Drehung der Spindel 264 entlang der Spindel nach oben bzw. unten bewegbar ist. Die Spindelmutter ist dabei mit dem Träger (nicht gezeigt) verbunden, der die Bauplattform 200 an ihrer Unterseite abstützt. Hierzu ist eine Ausnehmung in der Vorderwand 221 vorgesehen, durch die der Tragarm greift, um die Bauplattform 210 von unten abzustützen. Somit kann durch eine Drehung der Spindel die Bauplattform 210 abgesenkt bzw. angehoben werden. Ein solcher Spindeltrieb-Mechanismus ist z.B. in der DE 20 2006 010 327 U1 beschrieben, auf die insofern verwiesen wird als der Spindeltrieb, umfassend den Motor, die Spindel, die Spindelmutter und der Tragarm, betroffen ist. Jedoch ist die Baubox 200 anders als der in der DE 20 2006 010 327 U1 beschriebene Baubehälter nicht als Wechselbehälter ausgeführt, sondern vielmehr fester Bestandteil der Anlage. Die Abdichtung der Ausnehmung in der Vorderwand 221, durch die der Träger greift, kann zum Beispiel mit einem Blech erfolgen, das nach der Art eines Rollos funktioniert und sich beim Absenken der Bauplattform 210 auf die Innenseite der Vorderwand 221 anlegt, um die Tragarm-Ausnehmung zu überdecken/abzudichten. Eine solche Abdichtung ist z.B. in der DE 100 47 615 beschrieben (vgl. dort die Figuren 2 und 3), auf die insofern Bezug genommen wird. Die Stromversorgung des Motors 262 erfolgt wie die Stromversorgung des Motors 252 über die Schleppkette 270 (vgl. Figuren 2 und 3). Zudem ist auch der Bauplattform-Hubantrieb 260 mit der zentralen Steuereinrichtung verbunden (ebenfalls über die Schleppkette 270), so dass das Absenken der Bauplattform 210 während des Bauprozesses von der Steuereinrichtung gesteuert werden kann. Das Anheben der Bauplattform 210 in der Entpackungsposition der Baubox 200 kann entweder ebenfalls durch die zentrale Steuereinrichtung gesteuert werden oder manuell gesteuert werden durch Betätigen des Druckknopfes 212. Der in die Baubox 200 integrierte Hubantrieb 260 kann somit sowohl beim Bauprozess als auch beim Auspacken des fertig gestellten Formkörpers verwendet werden, so dass ein separater Motor zum Auspacken eingespart werden kann. Ferner muss die Bauplattform nach Beendigung eines Baujobs vor dem Herausfahren aus dem Gehäuse in die Entpackungsposition nicht bis zum unteren Totpunkt abgesenkt werden, wie dies bei Anlagen der Fall ist, bei denen der Hubantrieb an dem Anlagenrahmen montiert ist, sondern kann unmittelbar nach Fertigstellung des Formkörpers mit dem bauboxseitigen Fahrantrieb 250 in die Entpackungsposition gefahren werden, in der die Bauplattform 210 über den bauboxseitigen Hubantrieb 260 angehoben wird. Somit kann durch die Anordnung von Hubantrieb 260 und Fahrantrieb 250 an der Baubox 200 auch eine zeitersparnis erzielt werden.

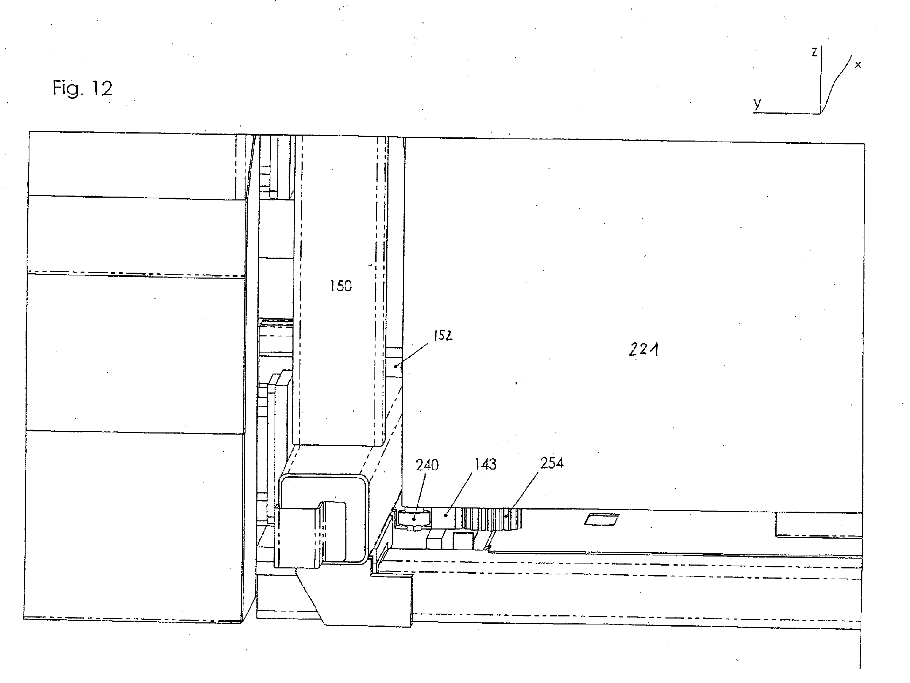

Figur 9 zeigt die Baubox 200 auf dem für die Baubox 200 vorgesehenen Schienensystem 140. Das Schienensystem 140 weist eine erste Schiene 141 und eine zweite Schiene 142 auf, welche parallel zueinander angeordnet sind. Ferner weist das Schienensystem 140 eine Zahnstange 143 auf, die parallel zu und nahe der zweiten Schiene 142 angeordnet ist. Die Zähne der Zahnstange 143 sind der ersten Schiene 141 zugewandt. Das an der Bauboxunterseite angebrachte Zahnrad 254 greift in die Zähne der Zahnstange 143 ein, um an der Zahnstange 143 abzurollen, wenn das Zahnrad über den Motor 252 angetrieben wird. An der der zweiten Schiene 142 zugewandten Seite der Zahnstange 143 rollen die beiden Führungsrollen 240 ab, die auf der Seite der zweiten Seitenwand 226 angebracht sind (vgl. Fig. 12). Zusätzlich oder alternativ können die beiden Führungsrollen 240 aber auch an der Innenseite der zweiten Schiene 142 abrollen. Die beiden Führungsrollen 240, die auf der Seite der ersten Seitenwand 226 angebracht sind, rollen an der Innenseite der ersten Schiene 141 ab. Die Baubox ist somit durch die Führungsrollen entlang/in der y-Richtung zentriert. Zur Reduzierung der Reibung, die bei einem Verfahren der Baubox 200 auftritt, sind an den einander zugewandten Innenflächen der Schienen Rollen (nicht gezeigt) angebracht, über die die Baubox 200 mit den Gleitkufen 242 rollen kann.

Für den Bauprozess ist es wichtig, dass sich die Baubox 200 exakt in der vorbestimmten Bauposition befindet, wozu die Baubox 200 in allen Achsrichtungen zentriert und fixiert sein sollte. Die Zentrierung und Fixierung in y-Richtung erfolgt über das oben beschriebene Führungsrollensystem. In z-Richtung wird die Baubox durch ihr Eigengewicht ausreichend fixiert. Somit ist nach dem Einfahren der Baubox 200 in das Gehäuse 110 und in die Bauposition lediglich noch eine Zentrierung und Fixierung in x-Richtung erforderlich, welche durch das in den Figuren 10 bis 13 gezeigte Bauboxfixierungssystem erfolgt.

Wie in **Figur 10** gezeigt ist, weist die Baubox 200 an einer der beiden Seitenwände (gemäß dieser Ausführungsform an der zweiten Seitenwand 226) ein Anschlagplättchen 226a, eine Ausricht-Vertiefung 226b und ein Sensorzielobjekt 226c auf. Das Anschlagplättchen 226a ist in Längsrichtung hinten angeordnet, d.h. nahe der hinteren Stirnwand 223, und die Vertiefung 226b ist vorne (nahe der vorderen Stirnwand 221) angeordnet. Die Position des Anschlagplättchens 226a und die Position der Vertiefung 226b können aber auch vertauscht sein. In z-Richtung sind das Anschlagplättchen 226a und die Vertiefung 226b in dem unteren Bereich der Seitenwand angeordnet. Die Ausricht-Vertiefung 226b ist konusförmig ausgebildet. Das Sensorzielobjekt 226c ist in Längsrichtung im Wesentlichen mittig angeordnet.

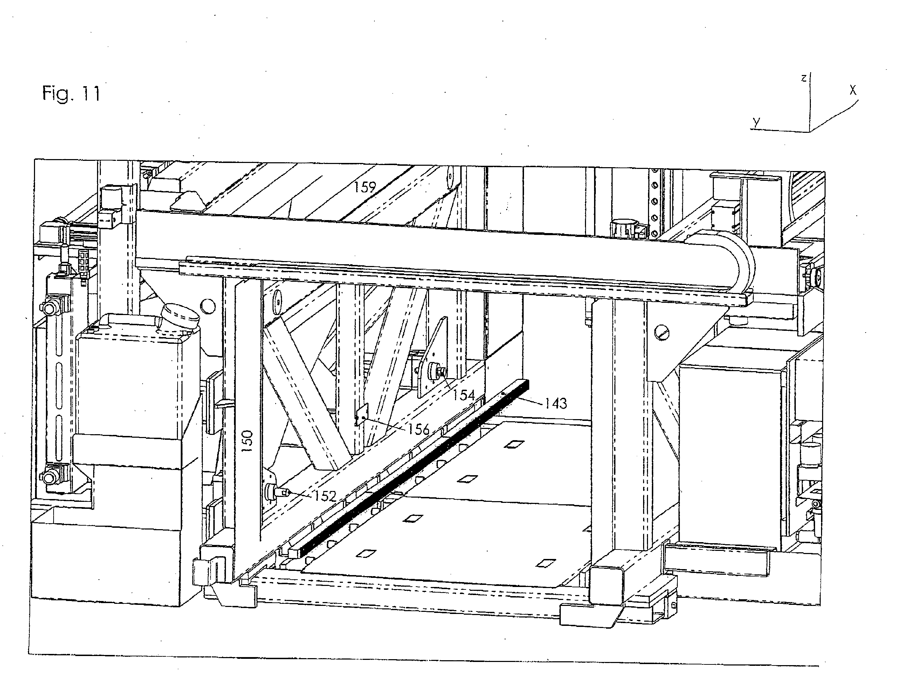

Wie in **Figur 11** gezeigt ist, sind an dem Anlagenrahmen 150 ein erstes Anpresselement/Ausricht-Element 152, welches mit der Ausricht-Vertiefung 226b zusammenwirkt, ein zweites Anpresselement/Fixierelement 154, welches mit dem Anschlagplättchen 226a zusammenwirkt, und ein Sensor 156 angebracht, welcher mit dem Sensorzielobjekt 226c zusammenwirkt. Das erstes Anpresselement 152 und das zweite Anpresselement 154 sind jeweils in y-Richtung bewegbar/verfahrbar. Die Bewegung der beiden Anpresselemente 152 und 154 wird über die zentrale Steuereinrichtung gesteuert. Das erste Anpresselement 152 weist einen Dorn auf, der entsprechend der Form der sich verjüngenden Vertiefung 226b geformt ist. Insbesondere ist der Endabschnitt des ersten Anpresselements 152 konusförmig ausgebildet. Das zweite Anpresselement 154 weist einen Bolzen mit einem flach ausgebildeten Endabschnitt auf.

Wenn die Baubox 220 in das Gehäuse 110 hinein gefahren ist, detektiert der Sensor 156, ob das Sensorzielobjekt 226c in einer vorbestimmten Position ist. Wenn das Sensorzielobjekt 226c in der vorbestimmten Position ist, gibt der Sensor ein "Baubox-in-Position-Signal" an die zentrale Steuereinrichtung aus. Die zentrale Steuereinrichtung veranlasst daraufhin ein Ausfahren der beiden Anpresselemente 152, 154, d.h. eine Bewegung in y-Richtung zu der Baubox 200 hin. Dadurch wird das erste Anpresselement 152 mit dem Konus in die Vertiefung 226c (siehe **Figur 12**) und das zweite Anpresselement 154 mit dem flachen Endabschnitt gegen das Anschlagplättchen 226a gedrückt, wodurch eine Zentrierung und Fixierung der Baubox 200 in/entlang der x-Richtung und an dem Anlagenrahmen erfolgt. Sodann kann der Bauprozess beginnen.

Da die Zentrierung in y-Richtung bereits durch die Führungsrollen 240 erfolgt, ist es ausreichend das Bauboxfixierungssystem einseitig auszubilden, d.h. es ist ausreichend, wenn nur eine der beiden Seitenwände mit der Vertiefung 226b und dem Anschlagplättchen 226a versehen ist.

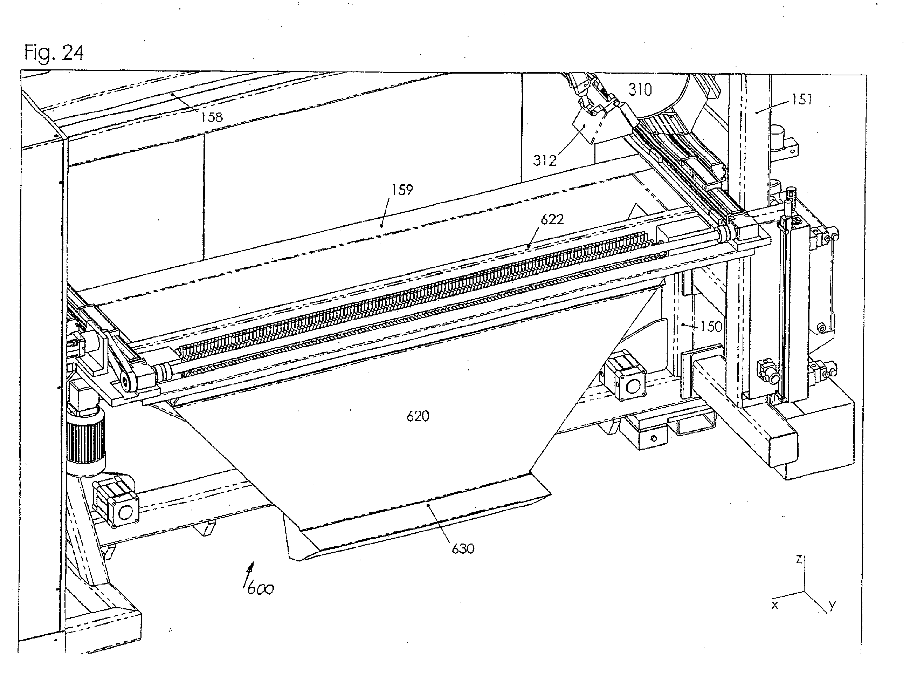

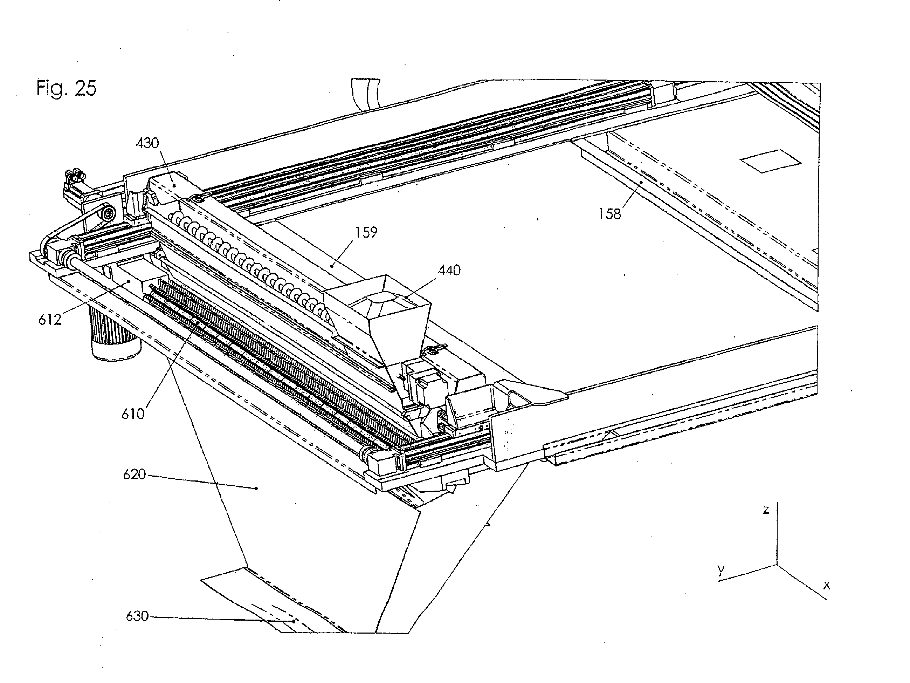

In **Figur 13** ist die Baubox 200 in ihrer Bauposition fixiert. Wie aus Figur 13 ersichtlich ist, wird die die Bauplattform 210 bzw. das Baufeld umgebende Baufeldabdeckung bzw. Baufeldumrahmung zum einen durch die beiden an der Baubox 200 angebrachten horizontalen Abdeckungsplatten 230 und 232 und zum anderen durch zwei anlagenseitige horizontale Begrenzungsplatten 158 und 159 (siehe auch Figuren 24 und 25) gebildet, welche an dem Anlagenrahmen 150 befestigt sind. Die beiden bauboxseitigen Baufeldplatten 230 und 232 erstrecken sich mit ihrer jeweiligen Längsachse parallel zur y-Achse (= Baubox-Querrichtung), und die beiden stationären anlagenrahmenseitigen Baufeldplatten 158 und 159 erstrecken sich mit ihrer jeweiligen Längsachse parallel zu der x-Achse (= Baubox-Längsrichtung).

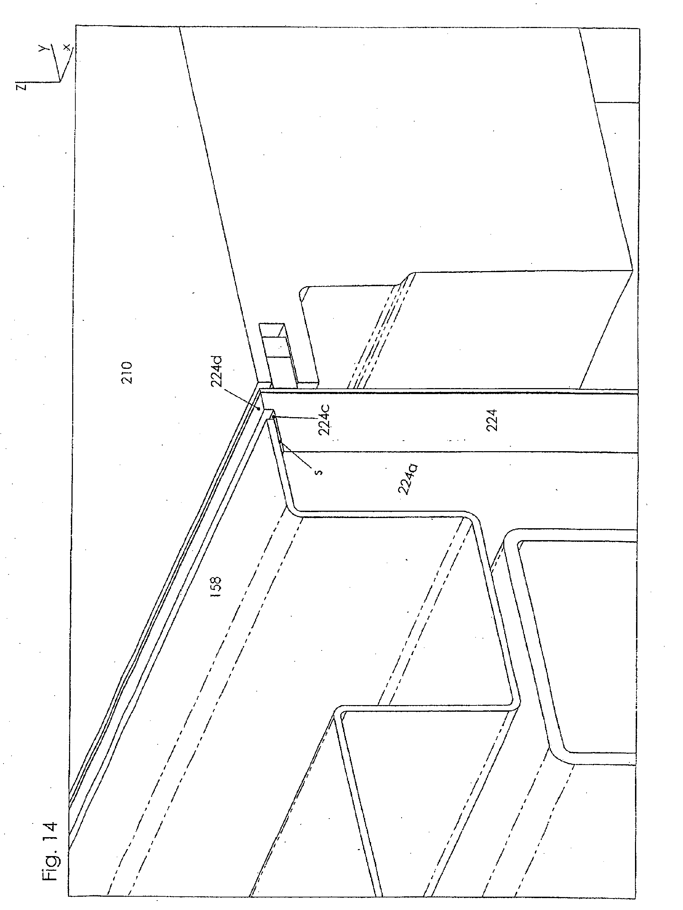

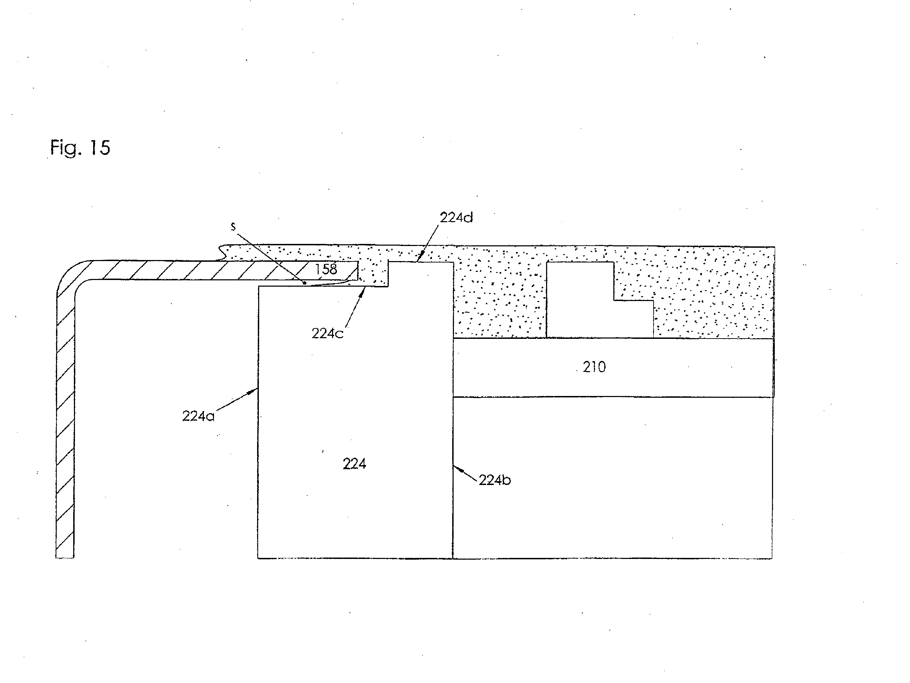

Wie aus den **Figuren 14** **und** **15** ersichtlich ist, weist die erste Seitenwand 224 an ihrer Oberseite bzw. an ihrer oberen Randfläche, welche sich in horizontaler Richtung zwischen der Außenseite 224a und der Innenseite 224b der ersten Seitenwand 224 erstreckt, eine Stufe 224d auf. Die Stufe 224d grenzt an die Innenseite 224b an und ist im Wesentlichen in derselben Horizontalebene angeordnet wie die beiden bauboxseitigen Baufeldplatten 230, 232. Ferner ist an bzw. von der Oberseite der oberen Randfläche eine horizontale Randfläche 224c ausgebildet, welche gegenüber der Stufe 224d abgesenkt ist und eine Dichtfläche ausbildet. Die horizontale Randfläche 224c grenzt an die Außenseite 224a an. Der Betrag bzw. die Höhe, um die die Dichtfläche 224c gegenüber der horizontalen Fläche der Stufe 224d und gegenüber den beiden bauboxseitigen Baufeldplatten 230, 232 abgesenkt ist, ist etwas größer als die Dicke der rahmenseitigen Baufeldplatte/Begrenzungsplatte 158, so dass ausreichend Vertikalspiel zwischen der Unterseite der rahmenseitigen Baufeldplatte 158 und der Dichtfläche 224c vorhanden ist, so dass die Baubox 200 sicher in die Bauposition gefahren werden kann. Der zwischen Dichtfläche 224c und rahmenseitiger Baufeldplatte 158 gebildete Spalt s kann z.B. eine Spalthöhe von 3 bis 20 mm haben, z.B. eine Spalthöhe von 3 bis 10 mm. Des Weiteren hat die Dichtfläche 224c eine derartige Breite, dass einerseits ausreichend Horizontalspiel zwischen der rahmenseitigen Baufeldplatte 158 und der Stufe 224d vorhanden ist, um die Baubox 200 in die Bauposition und aus dieser heraus zu verfahren, und dass andererseits eine ausreichende Baumaterial-Lauflänge bereitgestellt ist. Die Baumaterial-Lauflänge ist diejenige Länge, um die die Dichtfläche 224d von der rahmenseitigen Baufeldplatte 158 überragt wird (siehe Fig. 15), d.h. die Baumaterial-Lauflänge entspricht der Länge des Spalts, der zwischen Dichtfläche 224c und rahmenseitiger Baufeldplatte 158 gebildet ist. Die Baumaterial-Lauflänge ist derart gewählt, dass sich das Baumaterial in dem Spalt s totläuft (siehe Figur 15). Mit anderen Worten bildet sich in dem Spalt s ein Schüttkegel aus dem Baumaterial aus, wobei die Länge des Schüttkegels geringer ist als die Baumaterial-Lauflänge. Die derart geformte Dichtung zwischen Baubox 200 und rahmenseitiger Baufeldplatte 158 wird als Schüttkegeldichtung oder alternativ als Labyrinthdichtung bezeichnet.

In der gleichen Weise ist auch die zweite Seitenwand 226 mit einer Stufe versehen, um eine Schüttkegeldichtung zwischen der Baubox 200 und der rahmenseitigen Baufeldplatte 159 auszubilden.

Die Baubox 200 kann somit über den integrierten Fahrantrieb 250 entlang der x-Richtung in die Bauposition gefahren werden und mit dem obigen Bauboxfixierungssystem in der Bauposition fixiert werden, wobei unmittelbar nach der Fixierung der Baubox 200 mit dem Baujob begonnen werden kann. Weitere Schritte wie z.B. ein Anheben der Baubox 200 sind nicht erforderlich. Ferner kann die Anlagenhöhe gering gehalten werden, da die Baufeldhöhe im Wesentlichen der Bauboxhöhe entspricht.

### Mischvorrichtung 300

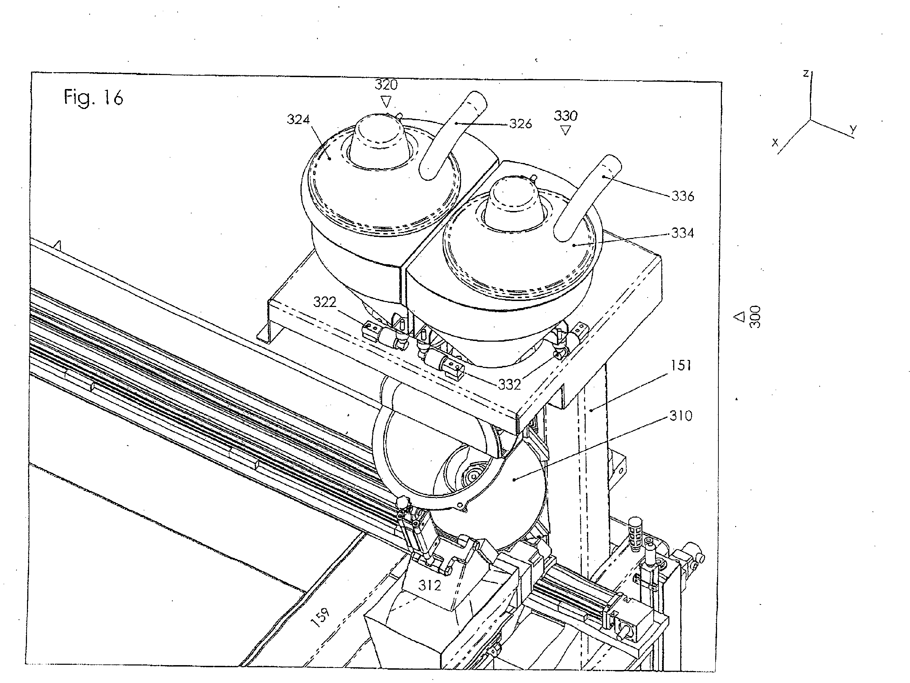

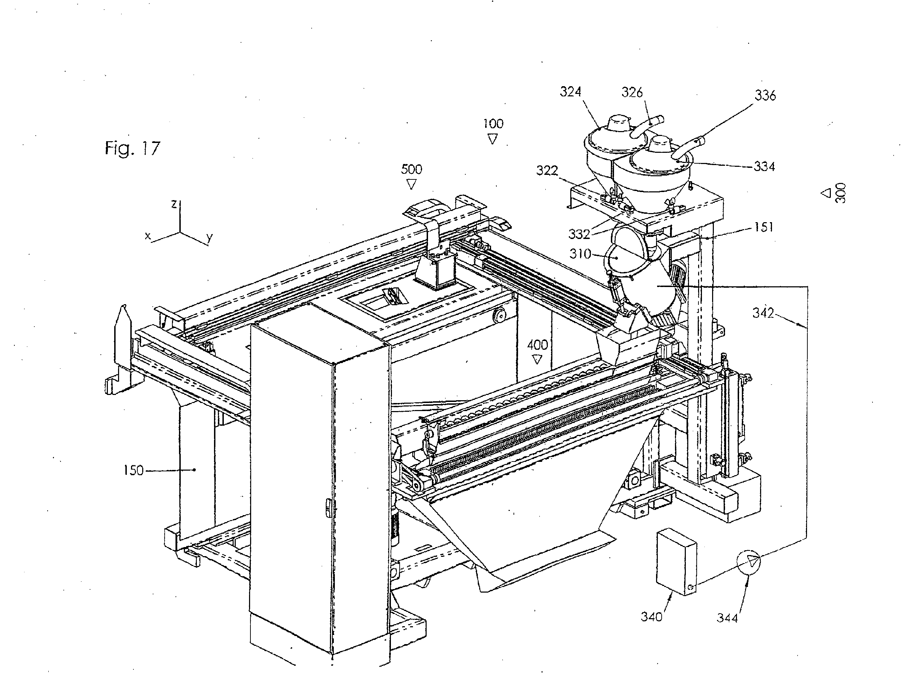

Im Folgenden wird unter Bezugnahme auf die **Figuren 16** **und** **17** eine erfindungsgemäße Mischvorrichtung 300 im Detail beschrieben.

Es wird angemerkt, dass die Mischvorrichtung 300 ebenso wie die oben beschriebene Baubox 200 nicht auf die Verwendung der hierin beschriebenen "Druckanlange" beschränkt ist, sondern vielmehr auch in anderen Rapid-Prototyping-Anlagen/Verfahren angewendet werden kann, wie z.B. beim Lasersintern.

Die Mischvorrichtung oder Mischeinheit 300 weist einen Mischer 310 auf, mit dem eine homogene Baumaterial-Mischung erzeugt werden kann. Der Mischer ist oberhalb des Beschichters 400 angeordnet und in die Anlage 100 integriert. Der Mischer 310 ist hier als ein zylindrischer Behälter ausgebildet, der eine Mischkammer begrenzt, in der ein Rühr- bzw. Mischelement angeordnet ist, das über einen Mischantrieb antreibbar ist, der an die zentrale Steuereinrichtung angeschlossen ist. Die Mischkammer hat eine trichterförmige Ausgabeöffnung 312, die in der Beschickungsposition des Beschichters 400 (siehe Fig. 16) über dem Beschichter 400 angeordnet ist, so dass dem Beschichter 400 das in dem Mischer 310 frisch zubereitete Baumaterial durch die Ausgabeöffnung 312 zuführbar ist. Der Mischer ist an einer vertikalen Säule 151 des Anlagenrahmens 150 befestigt. Die Ausgabeöffnung 312 des Mischers 310 wird von einer verstellbaren Armatur verschlossen, die von der zentralen Steuereinrichtung angesteuert wird.

Die Mischeinheit 300 weist ferner einen oberhalb des Mischers 310 angeordneten ersten Dosierbehälter 320, in dem frischer Formsand aufgenommen ist, und einen oberhalb des Mischers 310 angeordneten zweiten Dosierbehälter 330 auf, in dem recycelter Formsand aufgenommen ist. Der erste Dosierbehälter 320 und der zweite Dosierbehälter 330 stehen jeweils auf drei Wiegezellen 322, 332, die das Gewicht des zugeordneten Dosierbehälters 320, 330 erfassen und die jeweils an die zentrale Steuereinrichtung angeschlossen sind. Die beiden Dosierbehälter 320, 330 stehen jeweils über eine Rohrleitung mit dem Mischer 310 in Verbindung. In der jeweiligen Rohrleitung ist eine verstellbare Armatur (z.B. eine Klappe oder ein Ventil) vorgesehen, die von der zentralen Steuereinrichtung angesteuert wird. Der erste Dosierbehälter 320 und der zweite Dosierbehälter 330 können jeweils über eine nicht gezeigte Saugleitung, die an dem Anschlussstutzen 326, 336 befestigbar ist, mit Formsand befüllt werden, wozu sie jeweils eine Vorrichtung 324, 334 zum Erzeugen von Unterdruck aufweisen.

Ferner kann die Mischeinheit 300 einen oberhalb des Mischers 310 angeordneten dritten Dosierbehälter (nicht gezeigt) aufweisen, in dem ein pulverförmiger Zuschlagstoff enthalten ist, der z.B. über eine zellenradschleuse in den Mischer 310 eingespeist wird, die mit der zentralen Steuereinrichtung in Verbindung steht.

Ferner kann dem Mischer 310 mittels einer Dosierpumpe 344 durch eine Flüssigkeitsleitung 342 eine Flüssigkeit (hier Aktivator/Härter) aus einem ersten Flüssigkeitsbehälter 340 dosiert und gesteuert zugeführt werden.

Mit der oben beschriebenen Mischeinheit kann das Baumaterial während des Baubetriebs direkt in der Anlage frisch zubereitet und dem Beschichter insbesondere unmittelbar nach der zubereitung auf kurzem Wege zur Verfügung gestellt werden. Die einzelnen Komponenten werden in Reinform zu der oberhalb des Beschichters in der Beschickungsstation der Anlage angeordneten Mischeinheit gefördert (Feststoffe/Pulver z.B. über eine Saugleitung, Flüssigkeiten z.B. über Pumpen), wo die Baumaterial-Mischung zubereitet wird und nach ihrer Fertigstellung in den Beschichter eingespeist wird, und zwar durch Öffnen der Armatur (z.B. Klappe oder Schieber), die die Ausgabeöffnung 312 beherrscht.

Die eingangs beschriebenen, im Stand der Technik auftretenden Probleme (aufwendiges und komplexes Fördersystem zum Fördern der Mischung in die Anlage bzw. zu dem Vorratsbehälter, Reinigen des Fördersystems vor/nach jedem Wechsel des Baumaterialgemischs, Entmischung oder Austrocknung des Gemischs bei seiner Förderung) können somit vermieden werden.

### Beschichter 400

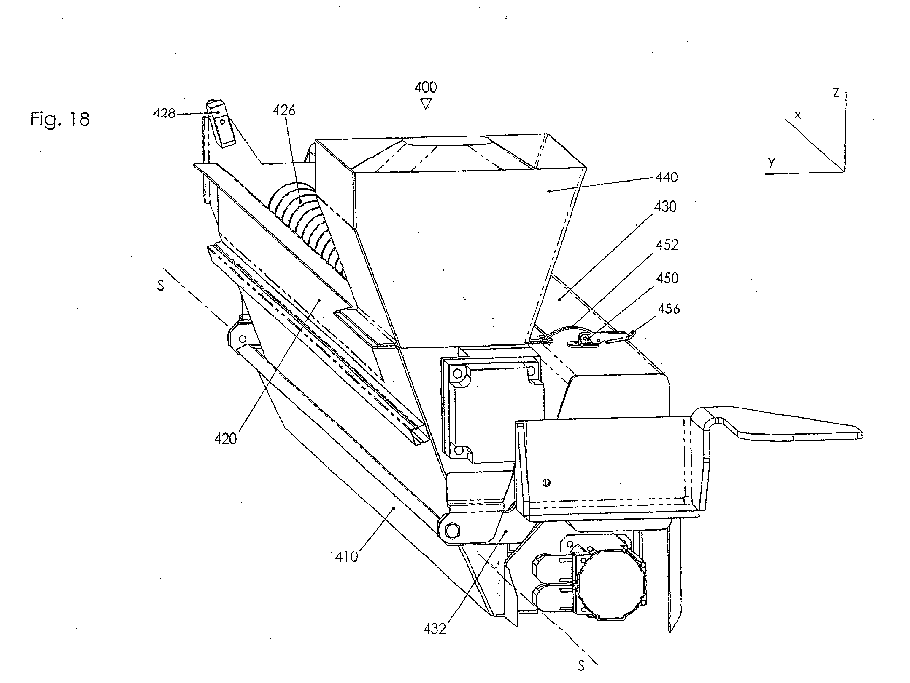

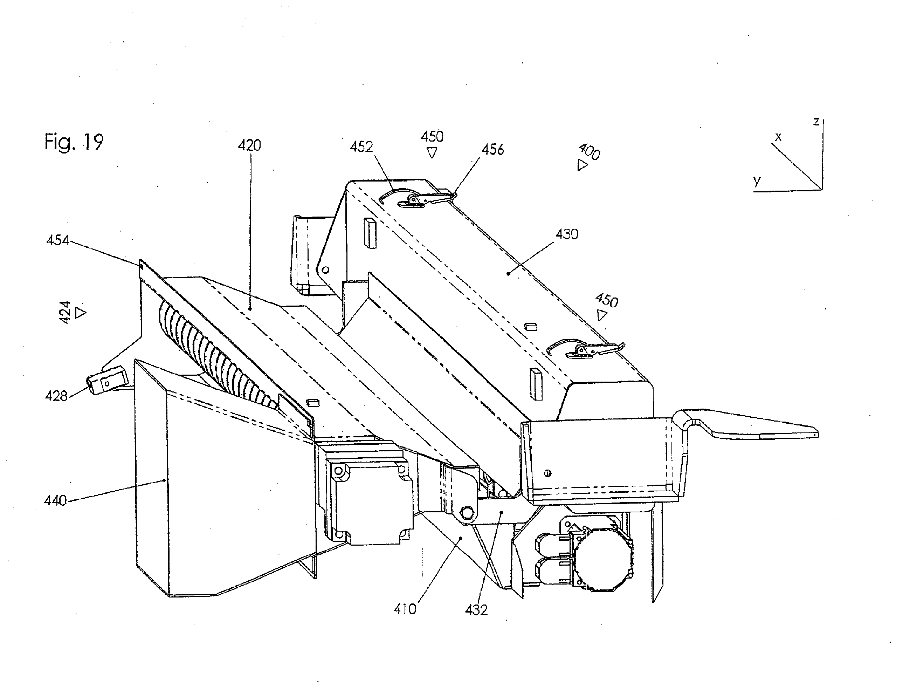

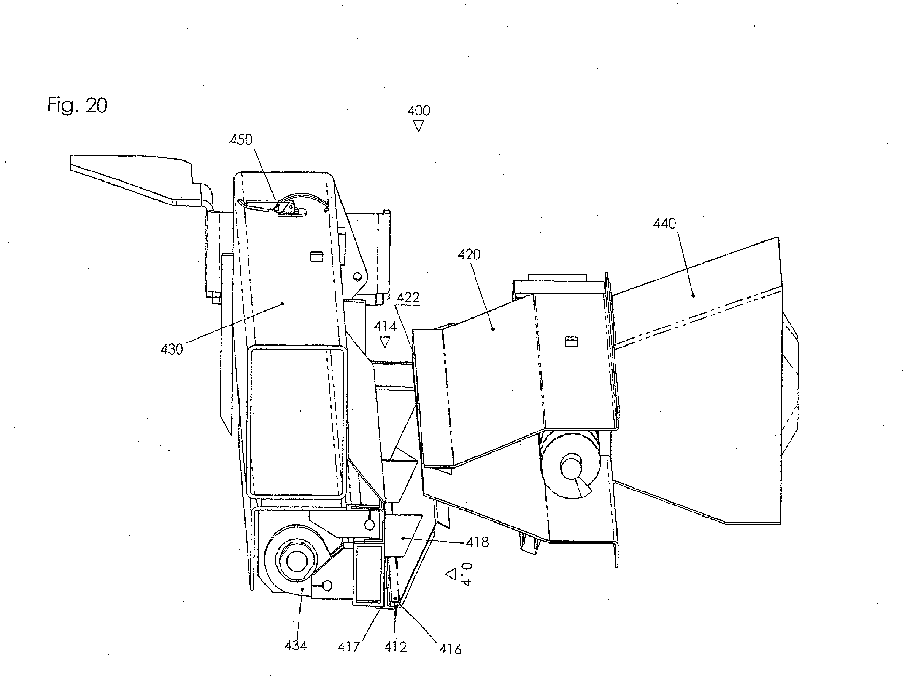

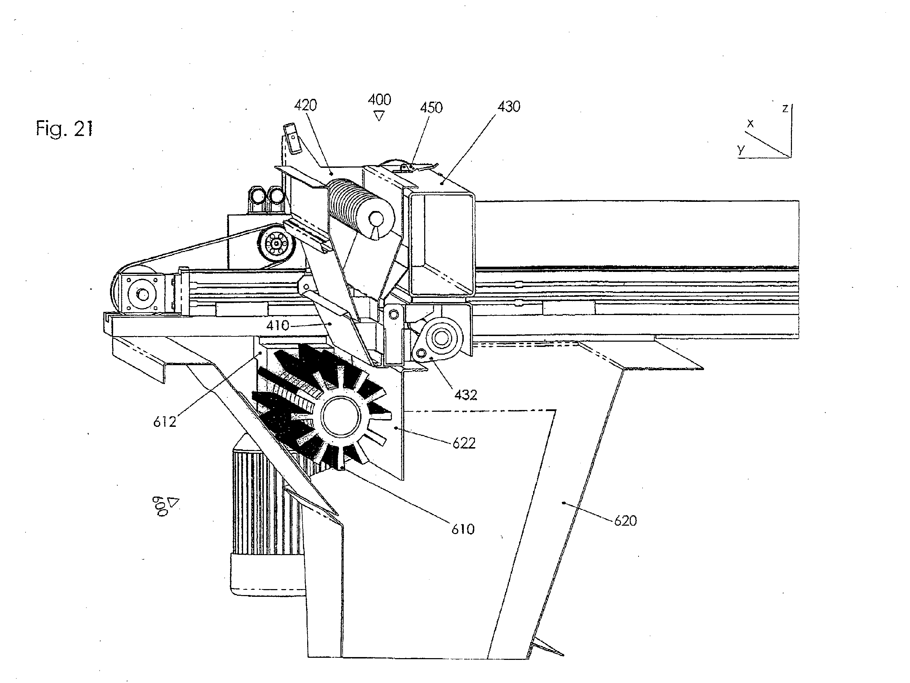

**Die** **Figuren 18 bis 21** zeigen einen horizontal verfahrbaren Beschichter 400 zum Aufbringen der Baumaterial-Schicht auf das Baufeld. Der Beschichter 400 weist einen langgestreckten im Querschnitt trichterförmigen Dosierschacht 410 auf. Der Dosierschacht 410 hat an seiner Unterseite einen Längsschlitz 412 zum Ausgeben des Baumaterials während der Bewegung des Dosierschachts 410 über das Baufeld hin. An seiner Oberseite weist der Dosierschacht 410 eine obere Zuführöffnung 414 auf, durch die dem Dosierschacht 410 Baumaterial zugeführt werden kann.

Der Beschichter 400 weist weiter einen mit dem Dosierschacht mitfahrenden Vorlagebehälter 420 auf, der oberhalb des Dosierschachts 410 angeordnet ist und eine untere Ausgabeöffnung 422 aufweist, die in die Zuführöffnung 414 des Dosierschachtes 410 eintaucht, um den Dosierschacht 410 während des Bauprozesses mit Baumaterial zu versorgen.

Der Dosierschacht 410 und der Vorlagebehälter 420 sind an einem Beschichter-Träger 430 montiert, wobei der Vorlagebehälter 420 schwenkbar mit dem Beschichter-Träger 430 verbunden ist, so dass er von dem Träger 430 und dem Dosierschacht 410 weggeschwenkt werden kann. Im Normalbetrieb ist der Beschichter-Träger 430 wie in Figur 18 gezeigt an dem Träger 430 befestigt/verriegelt und zwar mittels einer Verriegelungsvorrichtung 450, welche einen Greifarm 452 aufweist, der in dem in Figur 18 gezeigten Verriegelungszustand in eine an dem Vorlagebehälter 420 vorgesehene Eingreiföffnung 454 eingreift.

Aufgrund der verschwenkbaren Ausbildung des Vorratsbehälters 420 ist die Zugänglichkeit des Dosierschachts und des Vorratbehälters für eine Reinigung und/oder Reparatur derselben verbessert. Z.B. kann für eine Reinigung und/oder Reparatur des Beschichters 400 zunächst der Baubehälter 200 aus der Anlage 100 heraus gefahren werden, um in der Anlagenmitte Platz zu schaffen, woraufhin der Beschichter 400 in die Mitte der Anlage gefahren wird. Im Anschluss daran kann die Anlage betreten und z.B. der Vorlagebehälter 420 von dem Dosierschacht 410 und dem Träger 430 weggeschwenkt werden, um einzelne Stellen/Teile des Beschichters 400 zu reinigen/reparieren, wie z.B. die Zuführöffnung 414 des Dosierschachts 410, die Ausgabeöffnung 422 des Vorlagebehälters 420 oder die Innenwände des Vorlagebehälters 420 und des Dosierschachts 410. Insbesondere kann der Beschichter 400 aufgrund der verschwenkbaren Ausbildung des Vorlagebehälter 420 groß dimensioniert werden, wobei er dennoch von einer einzelnen Person problemlos gereinigt und/oder repariert werden kann, da keine Hebevorrichtung oder dergleichen benötigt, um den Vorlagebehälter nach oben anzuheben und von dem Dosierschacht wegzubewegen.

In dem Beschichter 400 ist eine Verteilerschnecke 426 angeordnet, die zusammen mit dem Vorlagebehälter 420 verschwenkbar ist und die das Baumaterial entlang der Vorlagebehälterlängsrichtung verteilt.

An der Oberseite des Vorlagebehälters 420 ist ein Zuführtrichter 440 angeschraubt, durch den Baumaterial aus der oberhalb des Beschichters 400 angeordneten Mischvorrichtung 300 in den Vorlagebehälter 420 hinein eingebracht werden kann.

Der Längsschlitz 412 des Dosierschachts 410 ist teilweise von einer Partikelmaterial-Umlenkplatte 416 überdeckt, die im Abstand über dem Längsschlitz 412 parallel zu diesem angeordnet ist.

### Druckkopf 500

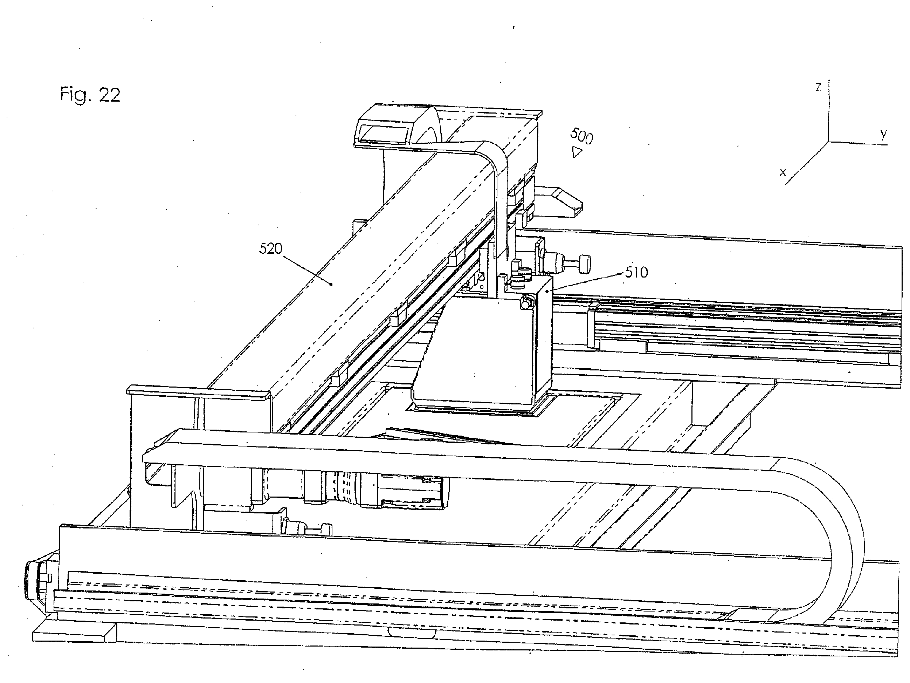

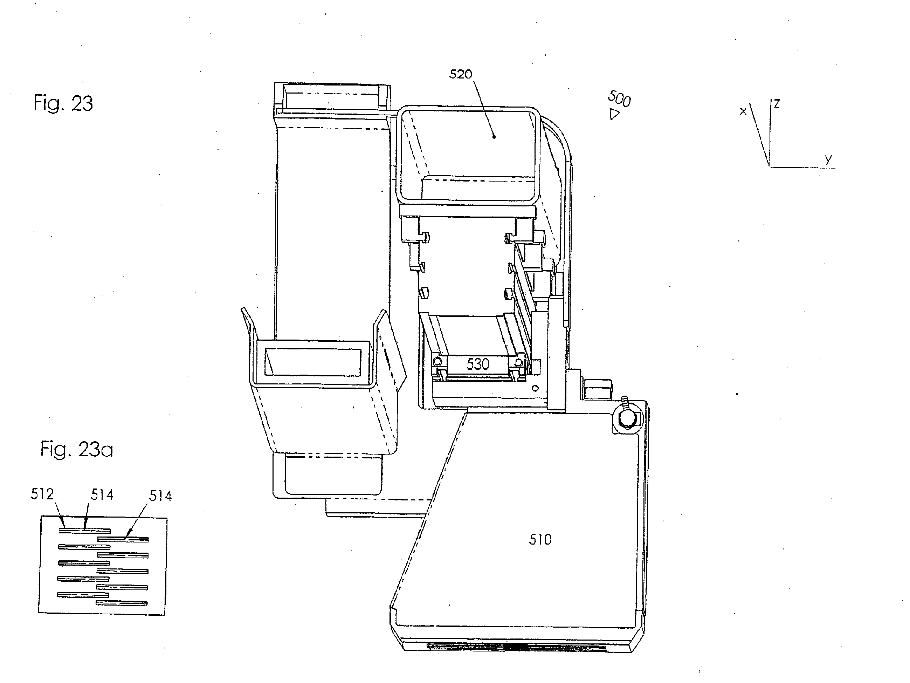

Die in den **Figuren 22** **und** **23** gezeigte Druckvorrichtung 500 weist einen langgestreckten horizontalen Druckkopf-Träger 520 auf, der entlang einer ersten Horizontalrichtung (= x-Richtung) über das Baufeld hin verfahrbar ist.

Ferner weist die Druckvorrichtung 500 einen an dem Träger 520 aufgehängten Druckkopf 510 auf, der mit einer Mehrzahl von Druckkopfdüsen 514 versehen ist zum gesteuerten Ausgeben von Harz auf die zu verfestigende Baumaterial-Schicht. Wie aus Figur 23a ersichtlich ist, hat der Druckkopf 510 eine Mehrzahl von Druckmodulen 512, welche in Druckkopf-Träger-Längsrichtung (x-Richtung) hintereinander in Reihe angeordnet sind und welche jeweils eine Vielzahl von Druckkopfdüsen 514 aufweisen, die in Druckkopf-Träger-Querrichtung (y-Richtung) hintereinander in Reihe angeordnet sind. Die Druckmodule 514 sind in zwei Druckmodul-Reihen angeordnet, die Module 512 der einen Reihe zu den Modulen 512 der anderen Reihe versetzt angeordnet sind.

Der Druckkopf 510 ist an einem Führungsschlitten 530 montiert, welcher an der Trägerunterseite des Druckkopf-Trägers 520 entlang der Druckkopf-Träger-Längsachse verfahrbar geführt ist, so dass der Druckkopf in x-Richtung verfahrbar ist und insgesamt mäanderförmig über das Baufeld verfahren werden kann. Der Druckkopf 510 ist unterhalb des Druckkopf-Trägers 520 angeordnet ist, wobei er den Träger 520 zumindest teilweise untergreift (siehe Figur 23). Der Massenschwerpunkt des Druckkopfes 510 befindet sich unter dem Druckkopf-Träger 520, bevorzugt auch unter dem Führungsschlitten 530.

Mit der oben beschriebenen Druckvorrichtung 500 kann ein von dem Druckkopf 510 erzeugtes Drehmoment um die Druckachse (= Druckkopf-Träger-Längsachse, x-Richtung) stark reduziert werden, wodurch einerseits eine Torsion des Druckkopf-Trägers 520 minimiert wird und somit die Stabilität und Schwingungsarmut des Druckkopfes 510 deutlich verbessert sind und wodurch andererseits Ausrichtfehler der Druckkopfdüsen 514 minimiert und daher die Druckqualität erhöht werden kann. Gleichzeitig werden eine gute Parallelität und ein definierter Abstand der Druckkopfunterseite zu der Oberseite der auf dem Baufeld zu bedruckenden Schicht sichergestellt. Dadurch können seinerseits die Anzahl der Druckkopfdüsen 514 bzw. Druckkopfmodule und folglich der Anlagendurchsatz deutlich erhöht werden, ohne dass hierunter die Qualität des herzustellenden Bauteils leidet. Weiter kann durch die Erhöhung der Stabilität und Schwingungsfestigkeit des Druckkopfes 510 der Abstand der Druckkopf-Unterseite zu der Oberseite der zu bedruckenden Schicht minimiert werden. Zudem können auf den Führungsschlitten 530 und dessen Führung an dem Druckkopf-Träger 520 einwirkende Kippmomente reduziert werden, so dass die Leichtgängigkeit des Führungsschlittens 530 des Druckkopfes insbesondere bei kleinen inkrementellen Bewegungen verbessert ist, was seinerseits zu einer Verbesserung der Druckqualität beiträgt. Des Weiteren kann die Anlage schmaler gebaut werden, da die Parkposition des Druckkopf-Trägers 520, in welcher der Druckkopf-Träger 520 zwischen zwei aufeinander folgenden Druckvorgängen geparkt ist, näher an das Baufeld heran gerückt werden kann, verglichen mit einer herkömmlichen Druckkopfvorrichtung, bei welcher der Druckkopf seitlich neben dem Druckkopf-Träger aufgehängt ist und daher von diesem in Horizontalrichtung wegragt.

### Beschichter-Reinigungsvorrichtung 600

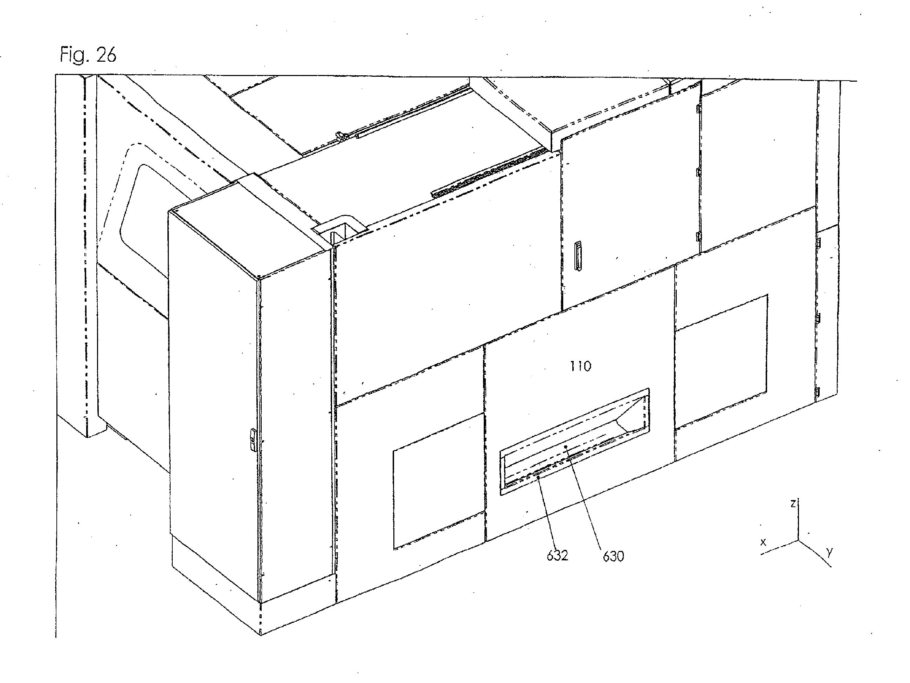

Die **Figuren 24 bis 26** zeigen eine Beschichter-Reinigungsvorrichtung 600 zum Reinigen des Dosierschachts 410 des oben beschriebenen Beschichters 400. Die Beschichter-Reinigungsvorrichtung 600 weist eine langgestreckte Bürste 610 auf, die unterhalb des Dosierschachts 410 des Beschichters 400 in einem Baumaterial-Auffangbehälter 620 aufgenommen ist. Die Länge der Bürste 610 ist mindestens so groß wie die Länge des Dosierschachts 410. Die Bürste 610 ist drehbar abgestützt und wird von einem Wischelement-Antrieb 612 drehbar angetrieben, der an die zentrale Steuereinrichtung angeschlossen ist. Die zentrale Steuereinrichtung steuert den gesamten Reinigungsprozess des Beschichters 400, d.h. das Verfahren des Beschichters 400 zu der Reinigungsvorrichtung 600 hin, die Drehbewegung der Bürste 610, sobald sich der Beschichter 400 in der Reinigungsposition befindet, und das Zurückfahren des Beschichters 400 in seine Parkposition nach der Reinigung. Die Steuereinrichtung kann eine Reinigung des Beschichters 400 z.B. nach einer vorbestimmten Anzahl von Beschichtungsfahrten oder in Abhängigkeit eines Sensorsignals veranlassen, welches anzeigt, ob ein Reinigen des Dosierschachts 410 erforderlich ist. Innerhalb des Baumaterial-Auffangbehälters 620 ist eine Umlenkplatte 622 derart angeordnet, dass Baumaterial, das mittels der Bürste 610 von dem Dosierschacht 410 abgestreift wird, von der Umlenkplatte 622 zu der Unterseite des Baumaterial-Auffangbehälters 620 abgelenkt wird. Der Baumaterial-Auffangbehälter 620 mündet in einen Speicher-Trichter für überschüssiges Baumaterial ein, und der Speicher-Trichter mündet in eine Speicher-Austrittswanne 630 ein. Die Speicher-Austrittswanne 630 steht über einen Schlitz mit einer Ausgabe-Öffnung 632 in Verbindung, welche in einer Außenwand des Anlagengehäuses 110 vorgesehen ist und durch die das in dem Speicher angesammelte Baumaterial während dem Bauprozess entnehmbar, z.B. absaugbar, ist.

### Druckkopf-Reinigungsvorrichtung 700

Das mit dem Druckkopf 510 aufzudruckende Harz ist stark viskos und kann unter gewissen Umständen an den Düsenöffnungen bzw. an der Druckkopfunterseite anhaften. Ebenso kann aufgewirbeltes Partikelmaterial an der Druckkopfunterseite anhaften. Um derartige Anhaftungen/Ablagerungen zu entfernen und die Druckkopf-Unterseite zu reinigen, ist die Druckkopf-Reinigungsvorrichtung 700 bereitgestellt.

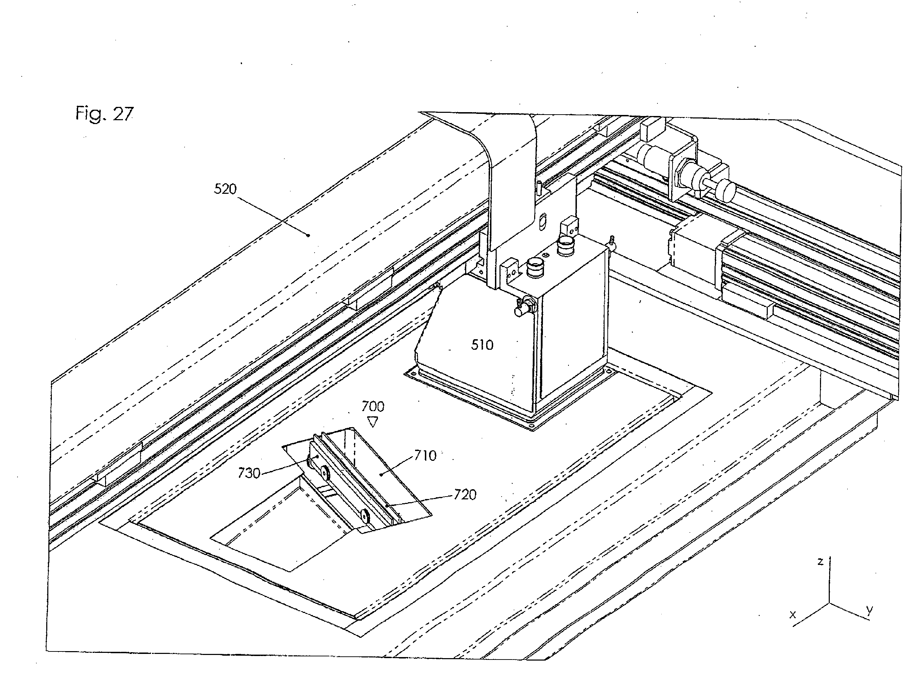

Die in den **Figuren 27 bis 29** gezeigte Reinigungsvorrichtung 700 weist einen Behälter mit einer wannenförmigen Vertiefung 710 auf, in der ein Reinigungsbad/lösungsmittel (nicht gezeigt) aufgenommen ist. Zum Zuführen und Abführen des Lösungsmittels sind an einem unteren Wannenabschnitt ein Zuführstutzen und ein Abführstutzen ausgebildet. Die Reinigungsvorrichtung 700 weist ferner zwei langgestreckte streifenförmige Wischlippen 720 auf, welche aus einem flexiblen Gummimaterial hergestellt sind. Die Wischlippen 720 erstrecken sich entlang der Wannenlängsrichtung und haben eine Länge die nur geringfügig kleiner ist als die der Wanne. Die beiden Wischlippen 720 sind von einem langgestreckten Trägerelement 730 gehalten. Das Trägerelement 730 weist einen im Querschnitt rechteckigen Halteteil auf, in dessen Oberseite zwei Längsnuten ausgebildet sind, in die die Wischlippen 720 eingesteckt sind. Zudem sind die Wischlippen 720 durch jeweils zwei Schrauben seitlich fixiert, welche in eine Seitenfläche des Halteteils eingeschraubt sind. Das Halteteil ist über drei Schrauben an einer Welle befestigt. Die Welle ist an den beiden in Längsrichtung gegenüberliegenden Wandseiten der Wanne drehbar abgestützt. Die Drehbewegung der Welle wird von der zentralen Steuervorrichtung gesteuert.

Durch die gesteuerte Drehbewegung der Welle können die beiden Wischlippen 720 somit zwischen der in Figur 2 gezeigten Druckkopf-Reinigungsposition und der in Figur 3 gezeigten Wischlippen-Regenerationspositionen hin- und hergeschwenkt werden.

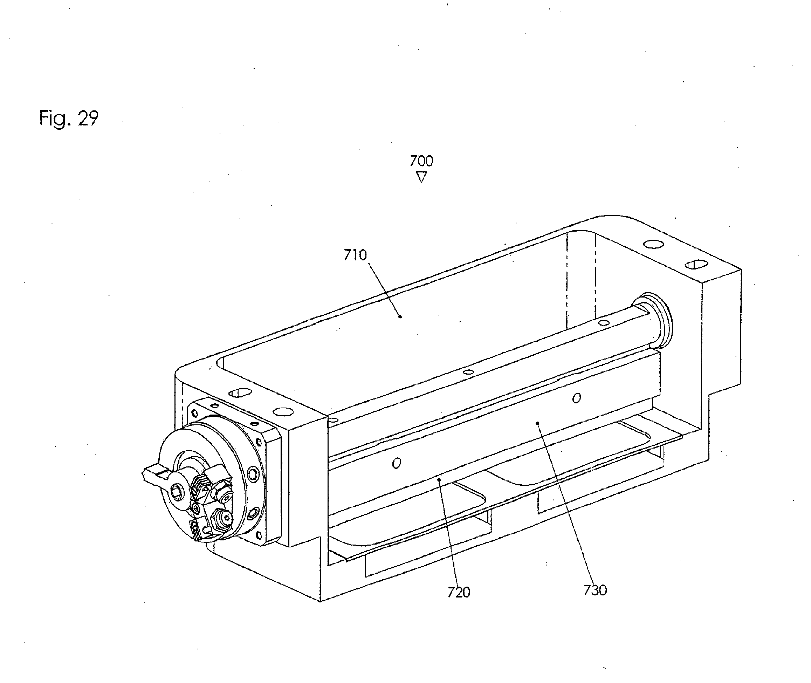

Dabei wird die Drehbewegung der Welle derart gesteuert, dass sich die beiden Wischlippen grundsätzlich in der in Figur 29 gezeigten Position befinden, in der die Wischlippen 720 in das Reinigungsbad eintauchen, so dass an den Wischlippen anhaftendes Bindemittel und Partikelmaterial in dem Reinigungsbad gelöst werden kann oder zumindest von den Wischlippen in das Bad übergeht, wodurch die Wischlippen 720 selbstständig gereinigt/regeneriert werden. Der Füllstand des Reinigungsbads in der Vertiefung 710 ist dabei bevorzugt derart gewählt, dass zumindest der aus dem Halteteil herausragende-Wischlippenteil vollständig in das Reinigungsbad eintaucht.

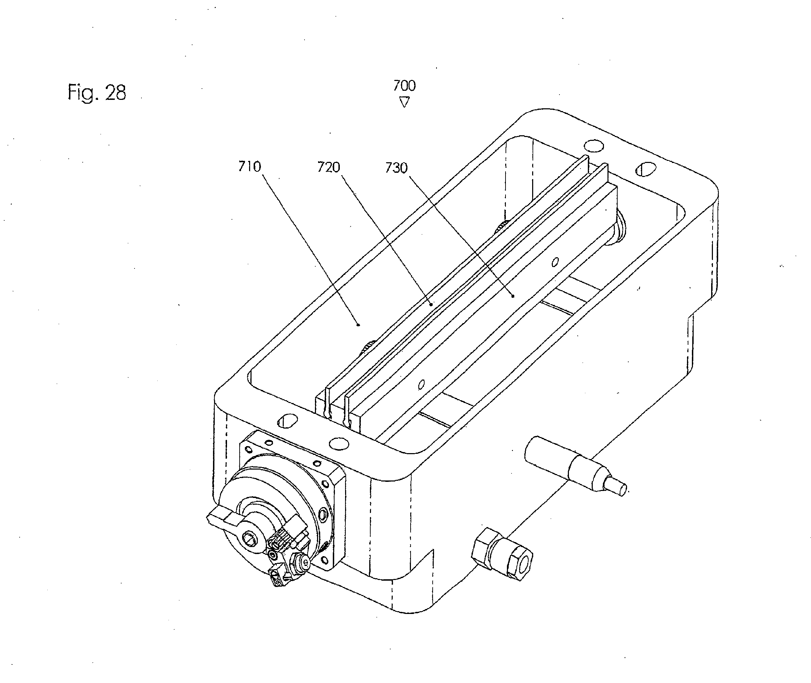

Nachdem eine vorbestimmte Anzahl von Druckfahrten absolviert wurde, veranlasst die Steuereinrichtung eine Drehbewegung der Welle um 180°, so dass die beiden Wischlippen 720 aus der in Figur 29 gezeigten Regenerationsposition in die in Figur 28 gezeigte Druckkopf-Reinigungsposition gebracht werden. Zudem steuert die Steuereinrichtung den Druckkopf 510 derart, dass dieser zu der Reinigungsvorrichtung 700 hin und (ggf. mehrmals) über diese hinweg fährt, wodurch seine Unterseite gereinigt wird.

Anschließend werden die Wischlippen 720 wieder in ihre Regenerationsposition bewegt und der gereinigte Druckkopf 510 in seine Parkposition gefahren.

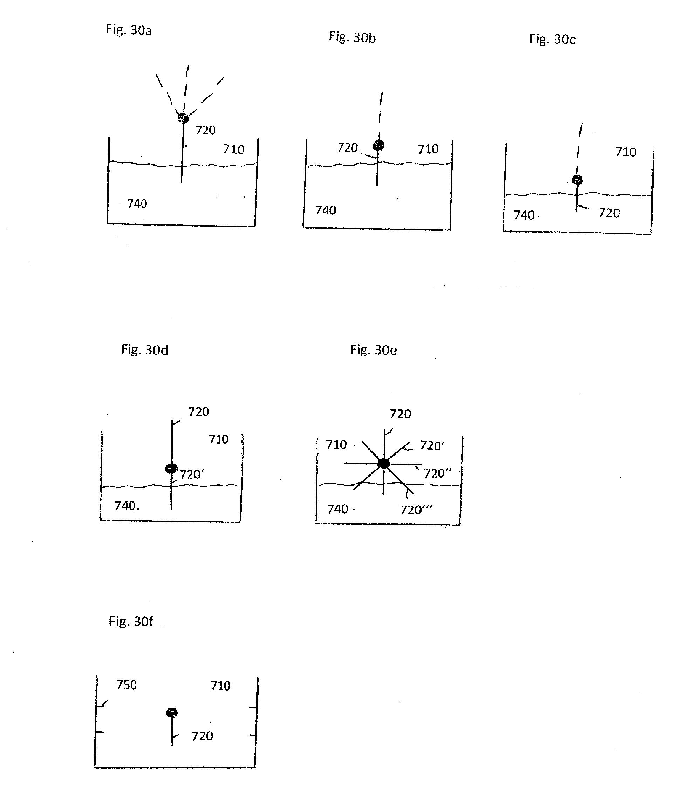

Wie in **Figur 30f** gezeigt (die Druckkopf-Reinigungsposition ist gestrichelt gezeichnet), können in der Wanne 710, insbesondere an den Seitenwänden der Wanne 710, mehrere Düsen 750 angeordnet sein, mit denen die beiden Wischlippen 720 in ihrer Regenerationsposition abgespritzt werden können. Die Düsen 710 können zusätzlich oder alternativ zu dem Reinigungsbad vorgesehen sein.

Weitere Ausführungsformen der Druckkopf-Reinigungsvorrichtung sind in den **Figuren 30a bis 30e** gezeigt, wobei die Druckkopf-Reinigungsposition gestrichelt gezeichnet ist.

## Patentansprüche

1. Anlage (100) zum schichtweisen Aufbau eines Formkörpers durch Ausbilden übereinander liegender Schichten aus einem Baumaterial, welches ein Gemisch aus einem ersten körnigen Material als eine erste Komponente und einer mit der ersten Komponente vermengten zweiten Komponente enthält, und durch selektives Verfestigen der jeweiligen Baumaterial-Schicht in einem Teilbereich vor dem Ausbilden der nächstfolgenden Schicht mittels einer Druckvorrichtung (500), aufweisend:
eine Druckvorrichtung (500), welche einen Druckkopfträger (520) und einen daran aufgehängten Druckkopf (510) aufweist,
eine Beschickungsstation,
einen Beschichter (400), der einen Dosierschacht (410) mit nach unten ausgerichtetem Ausgabeschlitz (412) aufweist und zum Beladen des Beschichters (400) mit Baumaterial in die Beschickungsstation hinein in eine Beschickungsposition und zum Aufbringen einer Baumaterial-Schicht aus der Beschickungsstation heraus und über ein Baufeld hinweg horizontal verfahrbar ist, und
eine Mischeinheit (300) mit einem in der Beschickungsstation oberhalb des Beschichters (400) angeordneten und in die Anlage integrierten Mischer (310) zum Erzeugen einer homogenen Mischung aus der ersten Komponente und der zweiten Komponente,
wobei der Mischer (310) eine in einem Mischbehälter angeordnete Mischkammer und ein in der Mischkammer angeordnetes Rührwerk aufweist, wobei der Mischer am Ausgang der Mischkammer eine Ausgabeöffnung (312) aufweist, die in der Beschickungsposition des Beschichters (400) über dem Beschichter (400) angeordnet ist, so dass, nachdem die mindestens zwei Komponenten in dem Mischer ausreichend miteinander vermischt wurden, die in dem Mis.cher (310) zubereitete Baumaterial-Mischung durch die Ausgabeöffnung (312) in eine nach oben ausgerichtete Einfüllöffnung des in der Beschickungsposition angeordneten Beschichters (400) einspeisbar ist, wobei die Ausgabeöffnung (312) von einer verstellbaren Armatur verschlossen wird, die von einer zentralen Steuereinrichtung angesteuert wird, und wobei die Baumaterial-Mischung nach ihrer Fertigstellung in der Mischeinheit (300) durch Öffnen der Armatur, welche die Ausgabeöffnung beherrscht, in den Beschichter eingespeist wird,
wobei die Mischeinheit (300) einen oberhalb des Mischers (310) angeordneten ersten Dosierbehälter (320) zur Aufnahme des ersten körnigen Materials und eine Dosiervorrichtung zum Dosieren des ersten körnigen Materials aus dem ersten Dosierbehälter (320) in den Mischer (310) hinein aufweist, und
wobei die Mischeinheit (300) einen oberhalb des Mischers (310) angeordneten zweiten Dosierbehälter (330) zur Aufnahme eines zweiten körnigen Materials und eine Dosiervorrichtung zum Dosieren des zweiten körnigen Materials aus dem zweiten Dosierbehälter (330) in den Mischer (310) hinein aufweist.

2. Anlage (100) nach Anspruch 1, wobei die Mischeinheit (300) an dem Anlagenrahmen (150) befestigt ist.

3. Anlage (100) nach.Anspruch 2, wobei die Mischeinheit (300) an einer vertikalen Säule (151) des Anlagenrahmens (150) befestigt ist.

4. Anlage (100) nach einem der Ansprüche 1 bis 3, wobei die erste Dosiervorrichtung und/oder die zweite Dosiervorrichtung jeweils mindestens eine Wiegezelle (322, 332) aufweisen, die das Gewicht des zugeordneten Dosierbehälters (320, 330) erfasst.

5. Anlage (100) nach einem der Ansprüche 1 bis 4, wobei die erste Dosiervorrichtung und/oder die zweite Dosiervorrichtung jeweils eine verstellbare Armatur aufweisen, mit welcher der dem Mischer (310) zugeführte Partikelstrom der Menge nach steuerbar ist.

6. Anlage (100) nach einem der Ansprüche 1 bis 5, wobei der erste Dosierbehälter (320) und/oder der zweite Dosierbehälter (330) jeweils eine Vorrichtung (324, 334) zum Erzeugen von Unterdruck aufweisen und dadurch zum Ansaugen von körnigem Material in den Dosierbehälter ausgebildet sind.

7. Anlage (100) nach einem der Ansprüche 1 bis 6, wobei die Mischeinheit (300) ferner einen oberhalb des Mischers (310) angeordneten dritten Dosierbehälter zur Aufnahme eines pulverförmigen Zuschlagstoffes aufweist, welcher über eine Zellenradschleuse mit dem Mischer (310) in Verbindung steht.

8. Anlage (100) nach einem der Ansprüche 1 bis 7, wobei der Mischer (310) über eine erste Zuführvorrichtung, welche eine Flüssigkeitsleitung (342) und eine Dosierpumpe (344) aufweist, mit einem ersten Flüssigkeitsbehälter (340) in Verbindung steht, so dass eine erste Flüssigkeit in den Mischer (310) dosierbar ist.

9. Anlage (100) nach einem der Ansprüche 1 bis 8, wobei der Mischer über eine zweite Zuführvorrichtung, welche eine Flüssigkeitsleitung und eine Dosierpumpe aufweist, mit einem zweiten Flüssigkeitsbehälter in Verbindung steht, so dass eine zweite Flüssigkeit in den Mischer dosierbar ist.

## Claims

1. Plant (100) for the layered construction of a shaped body by forming layers of a construction material including a mixture of a first granular material as a first component and a second component mixed with the first component, lying one upon another, and by selectively solidifying the respective construction material layer in a partial area by means of a printing device (500) prior to forming the next layer, comprising:
a printing device (500) having a print head carrier (520) and a print head (510) suspended thereon,
a feeding station,
a coating device (400) comprising a metering shaft (410) having an output slot (412) oriented downwards, and which is movable horizontally into the feeding station in a feeding position for charging the coating device (400) with construction material and out of the feeding station and across a construction field for applying a construction material layer, and
a mixing unit (310) with a mixer (310) arranged in the feeding station above the coating device (400) and integrated in the plant for generating a homogeneous mixture from the first component and the second component,
wherein the mixer (310) comprises a mixing chamber arranged in a mixing container and an agitator arranged in the mixing chamber, the mixer comprising an output opening (312) at the outlet of the mixing chamber, which in the feeding position of the coating device (400) is arranged above the coating device (400), so that, after the at least two components have been mixed with each other sufficiently in the mixer, the construction material mixture prepared in the mixer (310) can be fed through the output opening (312) into a filler opening oriented upwards of the coating device (400) arranged in the feeding position, wherein the output opening (312) is closed by an adjustable valve controlled by a central controller, and wherein the construction material mixture is fed into the coating device upon its completion in the mixing unit (300) by opening the valve controlling the output opening,
wherein the mixing unit (300) comprises a first dosage container (320), arranged above the mixer (310), for receiving the first granular material, and a dosing device for dosing the first granular material from the first dosage container (320) into the mixer (310), and
wherein the mixing unit (300) comprises a second dosage container (330), arranged above the mixer (310), for receiving a second granular material, and a dosing device for dosing the second granular material from the second dosage container (330) into the mixer (310).

2. Plant (100) according to claim 1, wherein the mixing unit (300) is fixed to the plant frame (150).

3. Plant (100) according to claim 2, wherein the mixing unit (300) is fixed to a vertical column (151) of the plant frame (150).

4. Plant (100) according to any of claims 1 to 3, wherein the first dosing device and/or the second dosing device each comprise at least one weighing cell (322, 332) which measures the weight of the associated dosage container (320, 330).

5. Plant (100) according to any of claims 1 to 4, wherein the first dosing device and/or the second dosing device each comprise an adjustable valve by means of which the flow of particles fed to the mixer (310) is controllable according to quantity.

6. Plant (100) according to any of claims 1 to 5, wherein the first dosage container (320) and/or the second dosage container (330) each comprise a device (324, 334) for generating negative pressure and are therefore formed to suck granular material into the dosage container.

7. Plant (100) according to any of claims 1 to 6, wherein the mixing unit (300) further comprises a third dosage container for receiving a powdery additive, arranged above the mixer (310), which is connected to the mixer (310) via a rotary feeder.

8. Plant (100) according to any of claims 1 to 7, wherein the mixer (310) is connected to a first liquid container (340) via a first feeding device comprising a fluid line (342) and a dosing pump (344), so that a first fluid can be dosed into the mixer (310).

9. Plant (100) according to any of claims 1 to 8, wherein the mixer is connected to a second liquid container via second feeding device comprising a fluid line and a dosing pump, so that a second fluid can be dosed into the mixer.

## Revendications

1. Installation (100) pour la structuration par couches d'un corps formé par réalisation de couches superposées d'un matériau de construction contenant un mélange d'un premier matériau granulaire à titre de premier composant et un deuxième composant entremêlé avec le premier composant, et par solidification sélective de la couche de matériau de construction respective dans une zone partielle au moyen d'un dispositif d'impression (500) avant la réalisation de la couche suivante, comportant :
un dispositif d'impression (500) comportant un support (520) de tête d'impression et une tête d'impression (510) suspendue à celui-ci,
une station d'alimentation,
un dispositif de revêtement (400) comportant un arbre de dosage (410) ayant une fente de distribution (412) orientée vers le bas, et qui est déplaçable horizontalement dans la station d'alimentation vers une position d'alimentation pour charger le dispositif de revêtement (400) de matériau de construction, et dehors la station d'alimentation et à travers un champ de construction pour déposer une couche de matériau de construction, et
une unité de mélange (300) ayant un mélangeur (310) disposé dans la station d'alimentation au-dessus du dispositif de revêtement (400) et intégré dans l'installation pour la génération d'un mélange homogène du premier composant et du deuxième composant,
le mélangeur (310) comportant une chambre de mélange disposée dans un récipient mélangeur et un agitateur disposé dans la chambre de mélange, le mélangeur comportant une ouverture de distribution (312) à la sortie de la chambre de mélange, disposée par-dessus le dispositif de revêtement (400) dans la position d'alimentation du dispositif de revêtement (400), de sorte que, suivant un mélange suffisant des au moins deux composants au mélangeur, le mélange de matériau de construction préparé au mélangeur (310) peut être alimenté à travers l'ouverture de distribution (312) à une ouverture de remplissage orientée vers le haut du dispositif de revêtement (400) disposé dans la position d'alimentation, l'ouverture de distribution (312) étant fermée par une valve ajustable contrôlée par une unité de contrôle centrale, et le mélange de matériau de construction étant alimenté au dispositif de revêtement après avoir été fini dans l'unité de mélange (300), par ouverture de la valve qui contrôle l'ouverture de distribution,
l'unité de mélange (300) comportant un premier récipient de dosage (320) disposé au-dessus du mélangeur (310) pour accueillir le premier matériau granulaire, et un dispositif de dosage pour charger le premier matériau granulaire à partir du premier récipient de dosage (320) au mélangeur (310), et
l'unité de mélange (300) comportant un deuxième récipient de dosage (330) disposé au-dessus du mélangeur (310) pour accueillir un deuxième matériau granulaire, et un dispositif de dosage pour charger le deuxième matériau granulaire à partir du deuxième récipient de dosage (330) au mélangeur (310).

2. Installation (100) selon la revendication 1, dans laquelle l'unité de mélange (300) est fixée au cadre de l'installation (150).

3. Installation (100) selon la revendication 2, dans laquelle l'unité de mélange (300) est fixée à une colonne verticale (151) du cadre d'installation (150).

4. Installation (100) selon l'une quelconque des revendications 1 à 3, dans laquelle le premier dispositif de dosage et/ou le deuxième dispositif de dosage comportent chacun au moins une cellule de pesée (322, 332) qui mesure le poids du récipient de dosage associé (320, 330).

5. Installation (100) selon l'une quelconque des revendications 1 à 4, dans laquelle le premier dispositif de dosage et/ou le deuxième dispositif de dosage comportent chacun une valve ajustable par laquelle le flux de particules alimenté au mélangeur (310) peut être contrôlé en ce qui concerne la quantité.

6. Installation (100) selon l'une quelconque des revendications 1 à 5, dans laquelle le premier récipient de dosage (320) et/ou le deuxième récipient de dosage (330) comportent chacun un dispositif (324, 334) pour générer une pression négative et sont ainsi configurés pour l'aspiration du matériau granulaire au récipient de dosage.

7. Installation (100) selon l'une quelconque des revendications 1 à 6, dans laquelle l'unité de mélange (300) comporte en outre un troisième récipient de dosage disposé par-dessus du mélangeur (310) pour accueillir un additif pulvérulent, relié avec le mélangeur (310) à travers une vanne rotative.

8. Installation (100) selon l'une quelconque des revendications 1 à 7, dans laquelle le mélangeur (310) est relié à travers un premier dispositif d'alimentation comportant une conduite de liquide (342) et une pompe de dosage (344) avec un premier récipient de liquide (340), de sorte qu'un premier liquide peut être dosé au mélangeur (310).

9. Installation (100) selon l'une quelconque des revendications 1 à 8, dans laquelle le mélangeur est relié à travers un deuxième dispositif d'alimentation comportant une conduite de liquide et une pompe de dosage avec un deuxième récipient de liquide, de sorte qu'un deuxième liquide peut être dosé au mélangeur.
